# EUROPEAN PATENT APPLICATION

(11) **EP 2 998 922 A1**
(43) Date of publication of application: **23.03.2016**
(21) Application number: 14798652.5
(22) Date of filing: 17.03.2014
(51) Int. Cl.: G06Q 30/06, G06Q 30/02

(54) **WEAR-TOGETHER-INFORMATION PROVISION SYSTEM AND READ-INFORMATION MANAGEMENT SYSTEM**

(30) Priority: 17.05.2013 JP 2013104844; 09.09.2013 JP 2013186289
(71) Applicant: Start Today Co., Ltd., Chiba-shi, Chiba 261-7116 (JP)
(72) Inventor: MAEZAWA Yusaku, Chiba-shi Chiba 261-7116 (JP); KUBOTA Tatsuya, Chiba-shi Chiba 261-7116 (JP)
(74) Representative: Schön, Christoph
(86) International application number: PCT/JP2014/057078
(87) International publication number: WO 2014/185144

(57) **Abstract**

[Problem]

To provide a coordinates information providing system and a read information management system that assist a user (customer) in properly selecting a commodity to purchase as well as in coordinating the commodity and other commodities.

[Means for solving the problem]

The coordinates information providing system includes a purchaser terminal 10 operated by a purchaser who purchases or plans to purchase a commodity, a management server 20 that manages information of a commodity as well as information of a purchaser and an information provider and that provides the purchaser terminal 10 with the information of the commodity, an information provider terminal 30 operated by an information provider who provides the management server 20 with coordinates information of a commodity, an information management administrator terminal 40 operated by an information management administrator who administrates the management server 20, and a network 100 interconnecting the terminals 10, 30, and 40 and server 20 to allow them to communicate with each other.

## Description

### [Technical Field]

The present invention relates to a coordinates information providing system and particularly relates to a coordinates information providing system and a read information management system that provide a user with detailed information of a commodity and information of coordinates examples using the commodity.

### [Background Art]

The spread of the Internet has lead to an increase in the number of consumers who purchase commodities on EC sites rather than at stores.

Consumers access EC sites, using PCs, portable terminals, etc., and are provided with services including delivery of purchased commodities. This allows the consumer to easily enjoy shopping at his or her home without bothering to visit a remote store.

Such a service provided by the EC site is widespread in the world of fashion.

However, purchasing dresses and accessories is different from purchasing household goods, books, etc., in terms of customer demands. Many customers actually want to visit a store and check the color, material, size, etc., of a dress or accessory by taking it in their hands or wearing it.

A conventional technique for use in the world of fashion has been proposed as a technique that combines services provided by EC sites with services provided by stores. This conventional technique is disclosed by patent document 1 as a potable terminal, a commodity service device, a memory medium storing therein a terminal control program, and a memory medium storing therein a commodity service control program (hereinafter "invention, described in patent document 1").

According to the invention described in patent document 1, a customer visits a department store, and operates a service terminal installed in the department store to read a bar code recorded on the tag of a commodity displayed in the department. Bar code information indicating the commodity is thus transmitted to the potable terminal of the customer. The customer then transmits the bar code information transmitted to the portable terminal, to a server. Hence the customer acquires information of the commodity identified by the bar code information, from the server and is able to purchase the commodity on an EC site.

The customer may bring home the commodity information acquired from the server, reexamine the information, and access the server again to place an order or make a payment on the EC site or after reexamining the information, may operate a home PC synchronized with the portable terminal to access the server via the Internet and place an order or make a payment on the EC site.

### [Prior Art Document]

### [Patent Documents]

[Patent Document 1] Japanese Laid-Open Patent Publication No. 2002-109302

### [Summary of the Invention]

### [Problem to Be Solved by the Invention]

However, according to the invention described in patent document 1, the customer may not be able to purchase a commodity meeting his or her demands.

Specifically, such a case may happen where the customer is pleased with the purchased commodity in the beginning but comes to have less opportunities of wearing the commodity for the reason that the commodity hardly fits in with clothes the customer already has in terms of material, color, etc.

The present invention was conceived in view of the above problem, and the object of the present invention is to provide a coordinates information providing system and a read information management system that assist a user

(customer) in properly selecting an optimum commodity to purchase as well as in coordinating the commodity and other commodities.

### [Means for Solving the Problem]

### (Providing Coordinates Information)

In order to achieve the object, a coordinates information providing system includes a purchaser terminal that reads a commodity code from a commodity code recording medium recoding thereon commodity codes for identifying commodities, and a management server connected to the purchaser terminal via a network, the management server managing coordinates information indicative of a coordinates example and information of a commodity used in the coordinates example such that both pieces of information are correlated with each other. When the management server receives a read commodity code from the purchaser terminal, the management server transmits coordinates information indicative of a coordinates example in which a commodity corresponding to the received commodity code is used, to the purchaser terminal.

### (Providing Commodity Information)

According to the coordinates information providing system of the present invention, when the management server receives a commodity code from the purchaser terminal, the management server transmits commodity information corresponding to the received commodity code, to the purchaser terminal. When the purchaser terminal receives commodity information from the management server, the purchaser terminal displays the received commodity information.

### (WANT/HAVE List)

According to the coordinates information providing system of the present invention, the purchaser terminal transmits a commodity code and information informing of the purchaser's planning to purchase or having purchased the commodity corresponding to the commodity code, to the management server. When the management server receives the commodity code and the information informing of the purchaser's planning to purchase or having purchased the commodity, the commodity code and information being sent from the purchaser terminal, the management server extracts commodity information based on the commodity code, creates a plan-to-purchase commodity list or a purchased commodity list, based on the extracted commodity information, and transmits the created list in response to a request from the purchaser terminal.

### (WANT/HAVE List)

According to the coordinates information providing system of the present invention, the management server stores therein commodity information and information informing of the purchaser's planning to purchase or having purchased the commodity such that both pieces of information are correlated with each other, and transmits the stored information in response to a request from the purchaser terminal.

### (Market Place)

According to the coordinates information providing system of the present invention, when the management server receives information informing of allowing sales of a commodity included in the purchased commodity list, the information being sent from the purchaser terminal, the management server creates a page for selling the commodity of which the sales is allowed and renders the created page accessible through a network.

### (Crawler)

According to the coordinates information providing system of the present invention, the management server browses around a Web page of a manufacturer or sales agent and extracts commodity information to store the extracted commodity information in the management server.

### (Information Provider Terminal)

The coordinates information providing system of the present invention further includes an information providing terminal that transmits coordinates information to the management server to register the coordinates information with the management server.

### (Coordinates Information from the Same User)

According to the coordinates information providing system of the present invention, the management server stores therein two or more pieces of information such that they are correlated with each other, the pieces of information being provided by an information provider who operates the information provider terminal, and transmits the stored information in response to a request from the purchaser terminal.

According to the coordinates information providing system of the present invention, the purchaser terminal reads information peculiar to a store from a recording medium placed in the store and transmits the read information together with a commodity code, to the management server. The management server stores therein the information peculiar to the store and the commodity code, the information and commodity code being sent from the purchaser terminal, such that the information and commodity code are correlated with each other.

According to the coordinates information providing system of the present invention, when the management server receives a commodity code for a commodity at a point in time at which the commodity is purchased by the purchaser on an EC site, the commodity code being sent from the purchaser terminal, the management server extracts a store specific code correlated with the received commodity code from stored store specific codes, and performs settlement transactions such that part of the payment for the commodity is transferred to a bank account of a store identified by the extracted store specific code.

A read information management system of the present invention includes a purchaser terminal operated by a commodity purchaser, the purchaser terminal reading a commodity code from a commodity code recording medium recording thereon commodity codes for identifying commodities, and a management server connected to the purchaser terminal via a network, the management server managing information on purchase of a commodity by the purchaser. The purchaser terminal reads information peculiar to a store from a recording medium placed in the store and transmits the read information together with a commodity code, to the management server. The management server stores therein the information peculiar to the store and the commodity code, the information and commodity code being sent from the purchaser terminal, such that the information and commodity code are correlated with each other.

According to the read information management system of the present invention, when the management server receives a commodity code for a commodity at a point in time at which the commodity is purchased by the purchaser on an EC site, the commodity code being sent from the purchaser terminal, the management server extracts a store specific code correlated with the received commodity code from stored store specific codes, and performs settlement transactions such that part of the payment for the commodity is transferred to a bank account of a store identified by the extracted store specific code.

Arbitrary combinations of the above constituent elements and mutual substitution and replacement of the constituent elements of the present invention or elements expressed as the constituent elements by or in devices, systems, computer programs, recording media carrying computer programs, etc., are also effective as modes of the invention.

### [Effects of the Invention]

A coordinates information providing system of the present invention includes a purchaser terminal that reads a commodity code from a commodity code recording medium recoding thereon commodity codes for identifying commodities, and a management server connected to the purchaser terminal via a network, the management server managing coordinates information indicative of a coordinates example and information of a commodity used in the coordinates example such that both pieces of information are correlated with each other. When the management server receives a read commodity code from the purchaser terminal, the management server transmits coordinates information indicative of a coordinates example in which a commodity corresponding to the received commodity code is used, to the purchaser terminal. Hence the coordinates information providing system that assists a purchaser in properly selecting an optimum commodity to purchase as well as in coordinating the commodity and other commodities is provided.

A read information management system of the present invention includes a purchaser terminal operated by a commodity purchaser, the purchaser terminal reading a commodity code from a commodity code recording medium recording thereon commodity codes for identifying commodities, and a management server connected to the purchaser terminal via a network, the management server managing information on purchase of a commodity by the purchaser. The purchaser terminal reads information peculiar to a store from a recording medium placed in the store and transmits the read information together with a commodity code, to the management server. The management server stores therein the information peculiar to the store and the commodity code, the information and commodity code being sent from the purchaser terminal, such that the information and commodity code are correlated with each other. As a result, when a commodity is purchased by the purchaser on an EC site, at which store the commodity was checked in the past can be found out easily. Which store contributes to sales on the EC site to what extent, therefore, can be understood easily.

### [Brief Description of Drawings]

[FIG. 1] FIG. 1 is a diagram showing a configuration of a coordinates information providing system according to a first embodiment of the present invention;
[FIG. 2] FIG. 2 is a diagram showing a configuration of a purchaser terminal according to the first embodiment of the present invention;
[FIG. 3] FIG. 3 is a diagram showing a configuration of a management server according to the first embodiment of the present invention;
[FIG. 4] FIG. 4 is a diagram showing an example of a configuration of data managed by a user DB according to the first embodiment of the present invention;
[FIG. 5] FIG. 5 is a diagram showing an example of a configuration of data managed by a commodity DB according to the first embodiment of the present invention;
[FIG. 6] FIG. 6 is a diagram showing an example of a configuration of data managed by a coordinates DB according to the first embodiment of the present invention;
[FIG. 7] FIG. 7 is a diagram showing a configuration of an information provider terminal according to the first embodiment of the present invention;
[FIG. 8] FIG. 8 is a diagram showing a configuration of an information management administrator terminal according to the first embodiment of the present invention;
[FIG. 9] FIG. 9 is a sequence chart showing a flow of an operation of registering user information according to the first embodiment of the present invention;
[FIG. 10] FIG. 10 is a sequence chart showing a flow of an operation of providing coordinates information according to the first embodiment of the present invention;
[FIG. 11] FIG. 11 is a sequence chart showing a flow of the operation of providing coordinates information according to the first embodiment of the present invention;
[FIG. 12] FIG. 12 is a diagram showing an example of a menu screen according to the first embodiment of the present invention;
[FIG. 13] FIG. 13 is a diagram showing an example of a coordinates information management screen according to the first embodiment of the present invention;
[FIG. 14] FIG. 14 is a diagram showing an example of a coordinates information editing screen according to the first embodiment of the present invention;
[FIG. 15] FIG. 15 is a diagram showing an example of the coordinates information editing screen according to the first embodiment of the present invention;
[FIG. 16] FIG. 16 is a diagram showing an example of a commodity search screen according to the first embodiment of the present invention;
[FIG. 17] FIG. 17 is a diagram showing an example of the coordinates information editing screen that results following commodity selection, according to the first embodiment of the present invention;
[FIG. 18] FIG. 18 is a sequence chart showing a flow of an operation of acquiring commodity information and coordinates information according to the first embodiment of the present invention;
[FIG. 19] FIG. 19 is a sequence chart showing a flow of the operation of acquiring commodity information and coordinates information according to the first embodiment of the present invention;
[FIG. 20] FIG. 20 is a diagram showing an example of a reading screen according to the first embodiment of the present invention;
[FIG. 21] FIG. 21 is a diagram showing an example of a commodity on-screen information display screen according to the first embodiment of the present invention;
[FIG. 22] FIG. 22 depicts an example of coordinates information displayed on the purchaser terminal according to the first embodiment of the present invention;
[FIG. 23] FIG. 23 depicts an example of displayed coordinates detailed information according to the first embodiment of the present invention;
[FIG. 24] FIG. 24 is a sequence chart showing a flow of an operation of acquiring different commodity information according to the first embodiment of the present invention;
[FIG. 25] FIG. 25 is a sequence chart showing a flow of an operation that is carried out when a coordinates example provided by an information provider is evaluated as "like", according to the first embodiment of the present invention;
[FIG. 26] FIG. 26 is a sequence chart showing a flow of an operation that is carried out when a coordinates example provided by an information provider is evaluated as "comment", according to the first embodiment of the present invention;
[FIG. 27] FIG. 27 is a sequence chart showing a flow of an operation that is carried out when a coordinates example provided by an information provider is evaluated as "favorite", according to the first embodiment of the present invention;
[FIG. 28] FIG. 28 is a sequence chart showing a flow of an operation of viewing coordinates information managed as favorite information, according to the first embodiment of the present invention;
[FIG. 29] FIG. 29 is a diagram showing an example of a my page according to the first embodiment of the present invention;
[FIG. 30] FIG. 30 is a diagram showing an example of a coordinates information list on-screen information according to the first embodiment of the present invention;
[FIG. 31] FIG. 31 is a sequence chart showing a flow of an operation that is carried out when a commodity the purchaser plans to purchase or has purchased is registered with the user DB, according to the first embodiment of the present invention;
[FIG. 32] FIG. 32 is a sequence chart showing a flow of an operation that is carried out when a commodity the purchaser plans to purchase or has purchased is checked, according to the first embodiment of the present invention;
[FIG. 33] FIG. 33 is a diagram showing an example of a plan-to-purchase commodity list displayed on a display unit, according to the first embodiment of the present invention;
[FIG. 34] FIG. 34 is a diagram showing an example of a purchased commodity list according to the first embodiment of the present invention;
[FIG. 35] FIG. 35 is a sequence chart showing a flow of an operation that is carried out when a purchaser purchases a commodity on an EC site, according to the first embodiment of the present invention;
[FIG. 36] FIG. 36 is a sequence chart showing a flow of an operation that is carried out when a purchaser registers a purchased commodity with the management server 20 for selling the commodity, according to the first embodiment of the present invention;
[FIG. 37] FIG. 37 is a diagram showing an example of a configuration of data managed by a commodity sales DB 224 according to the first embodiment of the present invention;
[FIG. 38] FIG. 38 is a sequence chart showing a flow of an operation that is carried out when the purchaser purchases a sales commodity registered with the commodity sales DB, according to the first embodiment of the present invention;
[FIG. 39] FIG. 39 is a diagram showing an example of a commodity sales page according to the first embodiment of the present invention;
[FIG. 40] FIG. 40 is a diagram showing an example of commodity sales information representing information of a sales commodity, according to the first embodiment of the present invention;
[FIG. 41] FIG. 41 is a sequence chart showing a flow of an operation of providing ranking information according to the first embodiment of the present invention;
[FIG. 42] FIG. 42 is a diagram showing an example of ranking information displayed on a user's terminal, according to the first embodiment of the present invention;
[FIG. 43] FIG. 43 is a diagram showing a configuration of a coordinates information providing system according to a second embodiment of the present invention;
[FIG. 44] FIG. 44 is a diagram showing a configuration of a management server according to the second embodiment of the present invention;
[FIG. 45] FIG. 45 is a diagram showing an example of a configuration of data managed by a store DB according to the second embodiment of the present invention;
[FIG. 46] FIG. 46 is a diagram showing an example of a configuration of data managed by a code reading history DB according to the second embodiment of the present invention;
[FIG. 47] FIG. 47 is a sequence chart showing a flow of an operation of registering a code information reading history; according to the second embodiment of the present invention; and
[FIG. 48] FIG. 48 is a flow chart showing a flow of an operation that is carried out when a purchaser purchases a commodity on an EC site, according to the second embodiment of the present invention.

### [Modes for Carrying Out the Invention]

### <First Embodiment>

### (Outline of First Embodiment)

A coordinates information providing system according to a first embodiment of the present invention is configured such that when a commodity purchaser at a store reads, for example, a bar code printed on a commodity code recording medium, such as tag, attached to a commodity the purchaser intends to purchase, using a purchaser terminal, the purchaser is able to acquire detailed information of the commodity from a management server and check the acquired information on the screen of the purchaser terminal.

### (Configurations According to First Embodiment)

### (1) Overall Configuration of Coordinates Information Providing System

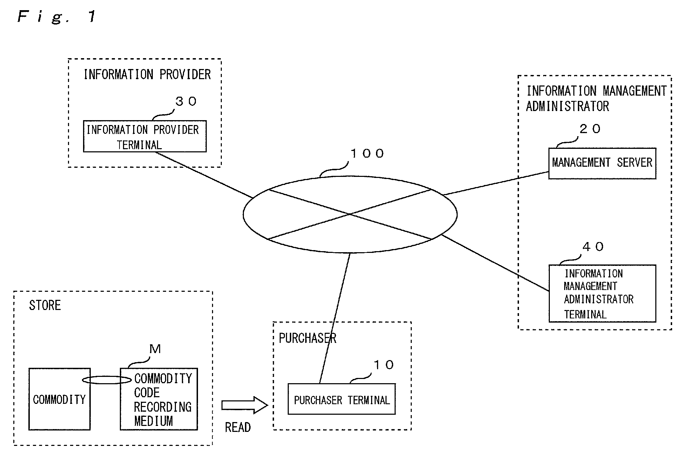

FIG. 1 is a diagram showing a configuration of the coordinates information providing system according to the first embodiment of the present invention.

As shown in FIG. 1, the coordinates information providing system includes a purchaser terminal 10 operated by a purchaser who purchases or plans to purchase a commodity, a management server 20 that manages information of a commodity as well as information of a purchaser and an information provider and that provides the purchaser terminal 10 with the information of the commodity, an information provider terminal 30 operated by an information provider who provides the management server 20 with coordinates information of a commodity, an information management administrator terminal 40 operated by an information management administrator who administrates the management server 20, and a network 100 interconnecting the terminals 10, 30, and 40 and server 20 to allow them to communicate with each other.

The coordinates information providing system according to the first embodiment of the present invention is configured in the above manner. According to this coordinates information providing system, when a commodity purchaser reads code information recorded on a commodity code recording medium M, such as tag, attached to a commodity the purchaser intends to purchase at a store, using the purchaser terminal 10, the purchaser is able to acquire detailed information of the commodity (which will hereinafter be referred to as "commodity information") from the management server 20 via network 100 and check the acquired information on the screen. By operating the purchaser terminal 10, the purchaser is also able to acquire information indicative of a coordinates example using the commodity (which will hereinafter be referred to as "coordinate information") from the management server 20 via the network 100.
Meanwhile, by operating the information provider terminal 30, an information provider is able to upload the coordinates information onto the management server 20 to register the coordinates information with the management server 20.

In this manner, according to this embodiment, the purchaser can examine each commodity the purchaser picks at a store for a prospective purchase such that the purchaser checks examples of combinations of the commodity with other commodities (coordinates information) as well as detailed commodity information of the commodity at the store or in other places. This allows the purchaser to easily picture an image of the purchaser wearing the commodity, thus enabling the purchaser to properly purchase a commodity fitting in with the purchaser. For example, the purchaser can reduce cases where the purchaser unnecessarily purchases a commodity that does not fit to a cloth already in purchasers' possession.

In this embodiment, for simpler explanation, an information provider who provides coordinates information is distinguished from a purchaser who purchases a commodity referring to the coordinates information. However, one user may provide coordinate information and purchase a commodity referring to the coordinates information at the same time. In other words, the user may act as a purchaser and an information provider at the same time.

Hereinafter, a term "user" means both "purchaser" and "information provider", and a term "user terminal" means both "purchaser terminal 10" and "information provider terminal 30".

### (2) Configuration of Purchaser Terminal 10

Each of the constituent elements of the coordinates information providing system will hereinafter be described in detail.

The purchaser terminal 10 is an information processor operated by a purchaser who purchases or plans to purchase a commodity, and is provided as, for example, a portable terminal, such as smart phone, cellular phone, PDA, and PHS, a PC, etc.

The purchaser operates the purchaser terminal 10 to acquire commodity information and coordinates information indicative of examples of commodity combinations from the management server 20.

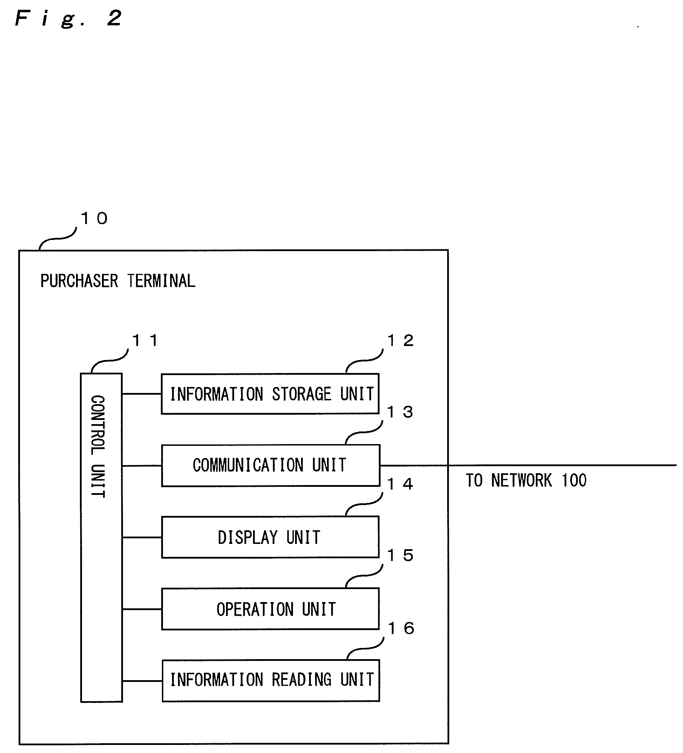

FIG. 2 is a diagram showing a configuration of the purchaser terminal 10 according to the first embodiment of the present invention.

As shown in FIG. 2, the purchaser terminal 10 includes a control unit 11 composed of a CPU, etc., that controls the overall operation of the purchaser terminal 10, an information storage unit 12 that stores therein input information and incoming information sent through the network 100, a communication unit 13 that transmits/receives information through the network 100, a display unit 14 composed of a display, etc., that displays information on its screen, an operation unit 15 composed of keys, etc., on which information is input, and an information reading unit 16 composed of a camera, etc., that reads code information, such as a bar code, from the commodity code recording medium M.

The commodity code recording medium M is, for example, a tag attached to a commodity sold at a store, etc., or an article (panel, poster, pedestal, etc.) placed in the store as the article corresponding to the commodity. In this case, these tag and article carry code information recorded thereon by printing, etc., which include a bar code, two-dimensional bar code, characters, and figures.

The information reading unit 16 of the purchaser terminal 10 reads the code information, using an optical scanner function. The information reading unit 16 may read the shape of the whole or part of the commodity and recognize a commodity code based on the read shape.

The commodity code recording medium M may be such an information recording medium as electronic tag, etc., capable of short-distance radio communication. In this case, the electronic tag carries a commodity code written thereon as code information. The information reading unit 16 thus reads the commodity code from the commodity code recording medium M, using short-distance radio communication function.

### (3) Configuration of Management Server 20

The management server 20 is a server administrated by an information management administrator who manages the commodity information and coordinates information as well as personal information of each user, i.e., purchaser and information provider (which will hereinafter be referred to as "user information").

The management server 20 creates a Web page on the user, commodity, etc., based on the user information, commodity information, and coordinates information and puts the Web page open to the public on the Internet.

The details and specific examples of such Web page will be described later, referring to drawings.

The management server 20 accumulates coordinates information provided by the information provider terminal 30 via the created Web page, etc., correlates the coordinates information with commodity information and personal information stored in advance in the management server 20 to manage the correlated information in databases, and transmits commodity information, coordinates information, and personal information in response to a request sent from the purchaser terminal 10 via the created Web page.

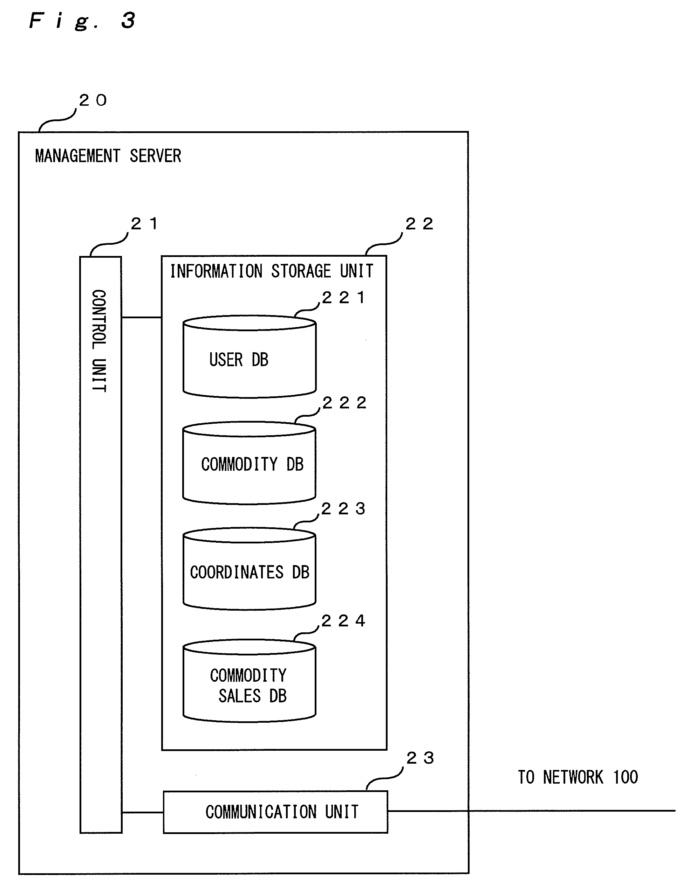

FIG. 3 is a diagram showing a configuration of the management server 20 according to the first embodiment of the present invention.

As shown in FIG. 3, the management server 20 includes a control unit 21 composed of a CPU, etc., that controls the overall operation of the management server 20, an information storage unit 22 having databases for user information, commodity information, and coordinates information, and a communication unit 23 that transmits/receives information through the network 100.

As shown in FIG. 3, the information storage unit 22 has a user database (DB) 221 that manages user information, a commodity database (DB) 222 that manages commodity information, a coordinates database (DB) 223 that manages coordinates information, and a commodity sales database (DB) 224 that manages information of commodities sold/purchased between users.

The information storage unit 22 also stores therein images of users, commodities, and coordinates examples, the above Web page, and other various pieces of information.

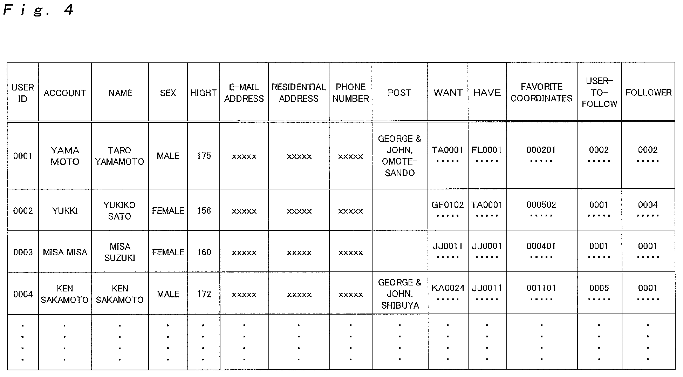

FIG. 4 is a diagram showing an example of a configuration of data managed by the user DB 221 according to the first embodiment of the present invention.

The user DB 221 is a database that manages user information, which is personal information of a purchaser who purchases or plans to purchase a commodity and an information provider who provides coordinates information.

As shown in FIG. 4, the user DB 221 manages various pieces of personal information such that the personal information is correlated with each user ID for identifying each user (purchaser and information provider).

The management server 20 puts each user's Web page open to the public in the form of a my page which carries some of such pieces of personal information and can be viewed on the Internet.

As shown in FIG. 4, the personal information managed by the user DB 221 includes, for example, general personal information indicating the user's account, name, sex, height, e-mail address, residential address, phone number, post (store the user works at, brand name, etc.), etc., and personal information characteristic of the coordinates information providing system.

The personal information characteristic of this system includes, for example, a commodity code (WANT) for a commodity each user is examining for a prospective purchase, a commodity code (HAVE) for a commodity actually purchased by each user, and a coordinates ID (favorite) for a coordinates example favored by each user.

The information storage unit 22 also stores therein image information of each user (including a thumbnail image) correlated with the user ID. This user image information is used as a user icon.

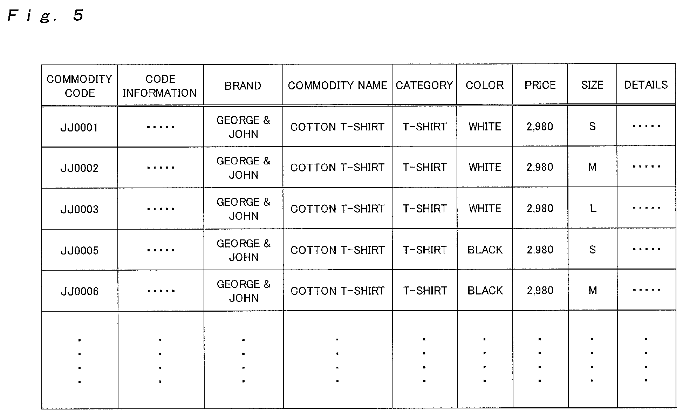

FIG. 5 is a diagram showing an example of a configuration of data managed by the commodity DB 222 according to the first embodiment of the present invention.

The commodity DB 222 is a database that manages commodity information, i.e., information of a commodity a purchaser purchases or plans to purchase, such that the commodity information is correlated with each specific commodity code for identifying each commodity.

As shown in FIG. 5, the commodity information managed by the commodity DB 222 includes, for example, the commodities' brand name, name, category, color, price, size, and details.

The information storage unit 22 also stores therein image information of each commodity (including a thumbnail image) correlated with the commodity code, as commodity information.

The above commodity information is input and transmitted on the information management administrator terminal 40, which is a PC, etc., and is registered with the commodity DB 222.

In another configuration, the management server 20 (control unit 21) may function as a so-called crawler, in which case the management server 20 browses around Web sites carrying commodity information and acquire the commodity information from the Web sites to register the commodity information with the commodity DB 222.

In this case, the management server 20 regularly browses around URLs and Web sites linked to the URLs (e.g., Web sites of companies and stores manufacturing and selling brand commodities (including EC sites)), acquires a newly created Web page and updated Web page, and stores the acquired Web pages in the information storage unit 22.

The management server 20 then analyzes the stored Web pages, extracts items of information (text, images, etc.) making up the commodity information, and registers the extracted information with the commodity DB 222, etc.

It is preferable that the information management administrator contact the above companies in advance and put extracted commodity codes (text, bar codes, two-dimensional codes, etc.) on the Web pages of the company or store the information management administrator belongs.

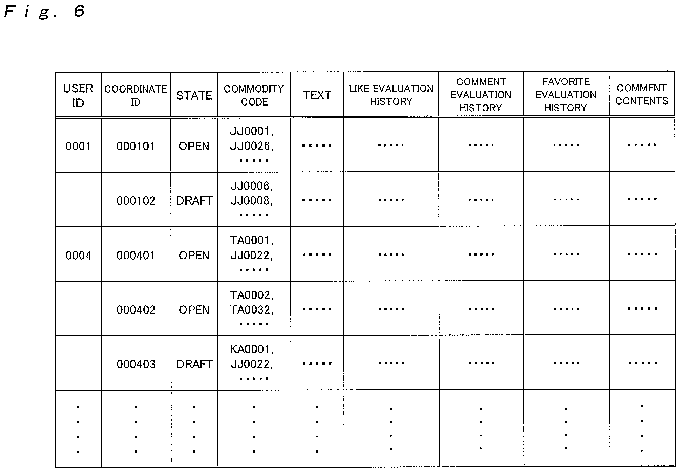

FIG. 6 is a diagram showing an example of a configuration of data managed by the coordinates DB 223 according to the first embodiment of the present invention.

The coordinates DB 223 is a database that manages coordinates information indicative of coordinates examples provided by information providers, by correlating the coordinates information with each specific coordinates ID for identifying each coordinates example (coordinates information).

As shown in FIG. 6, coordinates information managed by the coordinates DB 223 includes, for example, the status of coordinate information (whether the coordinate information is made open to the public on Web pages or not), commodity codes for commodities used in a coordinates example, and text (text information) explaining the coordinates example.

As shown in FIG. 6, each coordinates ID is correlated with each user ID for a user who has provided coordinates information identified by the coordinates ID. In the coordinates DB 223, therefore, each piece of coordinates information is managed such that which information provider has provided the coordinates information is indicated.

As shown in FIG. 6, the coordinates DB 223 also manages an evaluation history of each coordinates example ("Like", "Comment", "Favorite"), by correlating the evaluation history with each coordinates ID.

This evaluation history is made up of, for example, a user ID for a user who has evaluated the coordinates example and an evaluation time.

The information storage unit 22 also stores therein image information of each coordinates example correlated with each coordinate ID.

The commodity sales DB 224 will be described in detail later.

### (4) Configuration of Information Provider Terminal 30

The information provider terminal 30 is an information processor operated by an information provider who provides commodity coordinates information, and is provided as, for example, a portable terminal, such as smart phone, cellular phone, PDA, and PHS, a PC, etc.

The information provider operates the information provider terminal 30 to photograph a coordinates example or input text information, thereby inputs coordinates information and uploads the coordinates information onto the management server 20 via the network 100.

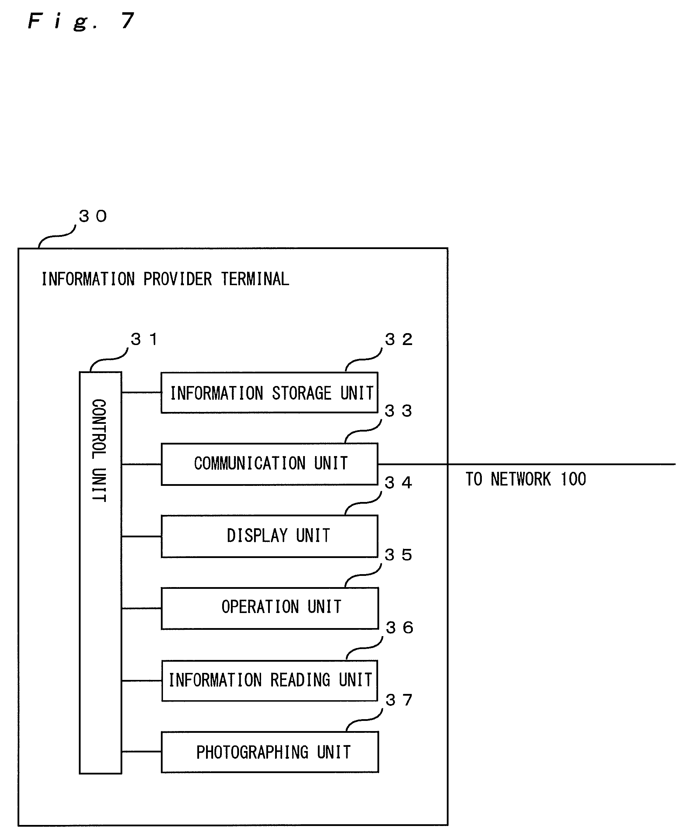

FIG. 7 is a diagram showing a configuration of the information provider terminal 30 according to the first embodiment of the present invention.

As shown in FIG. 7, the information provider terminal 30 is almost identical in configuration with the purchaser terminal 10. The information provider terminal 30 includes a control unit 31 composed of a CPU, etc., that controls the overall operation of the information provider terminal 30, an information storage unit 32 that stores therein input information and incoming information sent through the network 100, a communication unit 33 that transmits/receives information through the network 100, a display unit 34 composed of a display, etc., that displays information on its screen, an operation unit 35 composed of keys, etc., on which information is input, an information reading unit 36 that reads commodity identifying information (bar code, etc.), and a photographing unit 37 having a camera, etc., that takes an image of a coordinates example.

### (5) Configuration of Information Management Administrator Terminal 40

The information management administrator terminal 40 is an information processor operated by an information management administrator who manages the management server 20, and is provided as, for example, a PC or portable terminal.

For management of information stored in the management server 20 or maintenance of the management server 20, the information management administrator operates the information management administrator terminal 40 to input information to the management server 20 or check information stored in the management server 20.

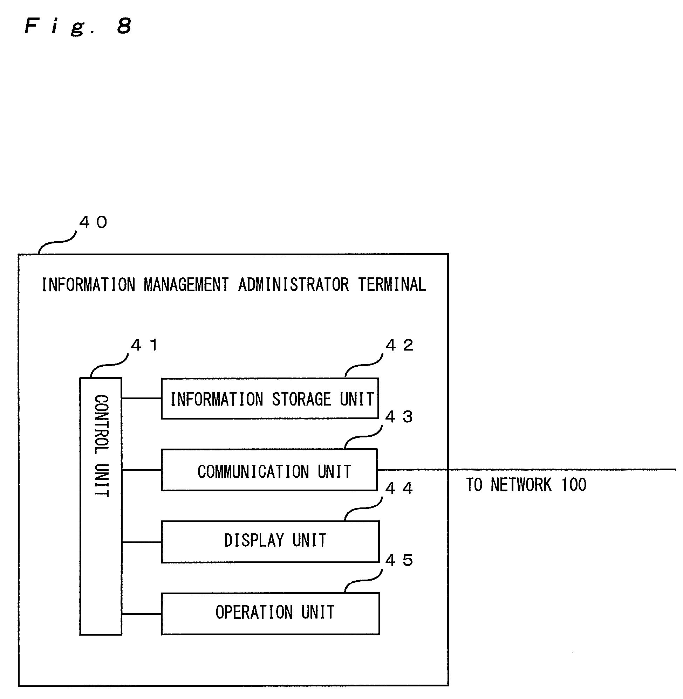

FIG. 8 is a diagram showing a configuration of the information management administrator terminal 40 according to the first embodiment of the present invention.

As shown in FIG. 8, the information management administrator terminal 40 is almost identical in configuration with the purchaser terminal 10. The information management administrator terminal 40 includes a control unit 41 composed of a CPU, etc., that controls the overall operation of the information management administrator terminal 40, an information storage unit 42 that stores therein input information and incoming information sent through the network 100, a communication unit 43 that transmits/receives information through the network 100, a display unit 44 composed of a display, etc., that displays information on its screen, and an operation unit 45 composed of keys, etc., on which information is input.

### <Operation>

### (1) User Information Registration Operation

A purchaser and an information provider transmit user information, i.e., personal information of the purchaser and information provider, to the management server 20, using their terminals 10 and 30, and register the personal information with the management server 20.

Before registering the user information, the purchaser and information provider install applications (application software) in their terminals 10 and 30 (i.e., equip their terminals 10 and 30 with applications) in order to use services provided by the coordinates information providing system of this embodiment.

The applications are installed by the same method as a method of installing ordinary software, and are therefore installed by transfer from a recoding medium, such as CD-ROM, or downloading.

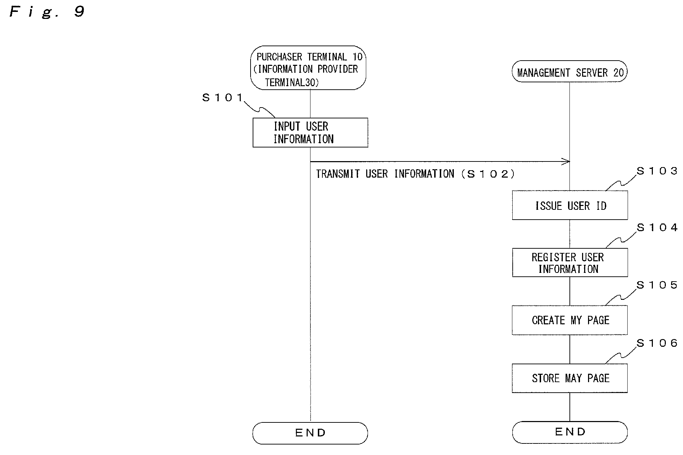

FIG. 9 is a sequence chart showing a flow of an operation of registering user information according to the first embodiment of the present invention.

Hereinafter, the operation of registering user information will be described by explaining an example in which the purchaser registers user information.

The purchaser operates the operation unit 15 of the purchaser terminal 10 to input user information of the purchaser (step S101).

The input user information includes, for example, the user's account, name, sex, height, e-mail address, residential address, and phone number.

The purchaser terminal 10 transmits the above input information to the management server 20 (step S102).

Upon receiving the user information from the purchaser terminal 10, the management server 20 issues a specific user ID to the purchaser (step S103), correlates the received personal information from the purchaser terminal 10 with the issued user ID, and registers the personal information, i.e., user information with the user DB 221 (step S104).

Based on the registered user information, the management server 20 then creates a my page dedicated to the purchaser (step S105), and stores the created my page in the information storage unit 22 such that the my page can be made open to the public on the Web (step S106).

The operation of registering user information is completed in this manner.

The created my page is each user's Web page displaying profile information including a user name, commodities the user is interested in, coordinate examples proposed by the user, etc. A configuration of the page will be described in detail later.

The operation carried out by the purchaser for registering user information has been described above. Like the purchaser, the information provider can register user information by executing the same steps. The information provider transmits the user information to the management server 20 to register the user information therewith, using the information provider terminal 30.

### (2) Operation of Providing Coordinates Information

Having completed the user information registration in the above manner, the information provider is able to input coordinates information, using the information provider terminal 30, to upload the coordinates information onto the management server 20.

The information provider terminal 30 is equipped in advance with an application (application software) for providing coordinates information.

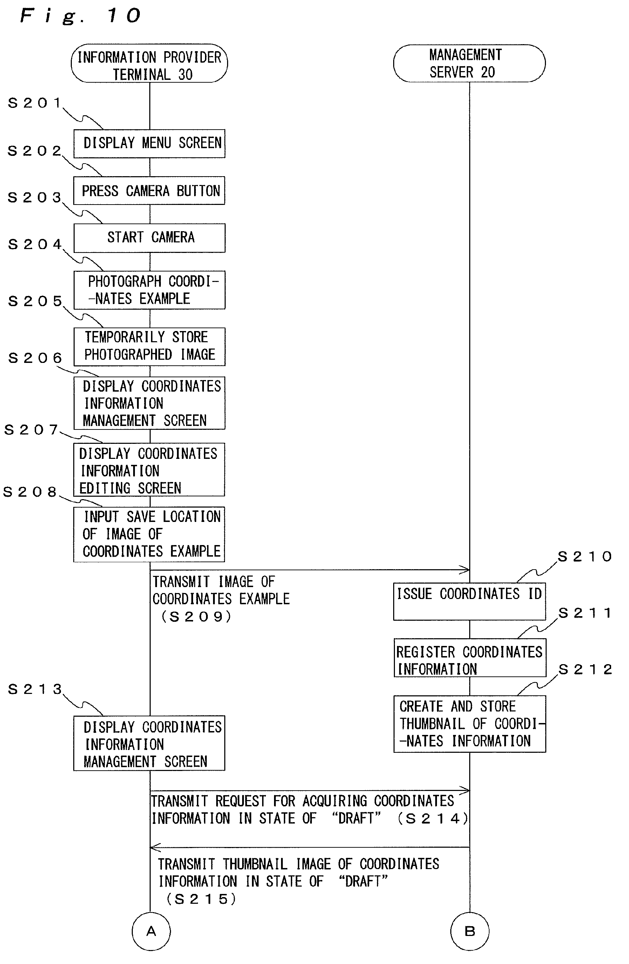

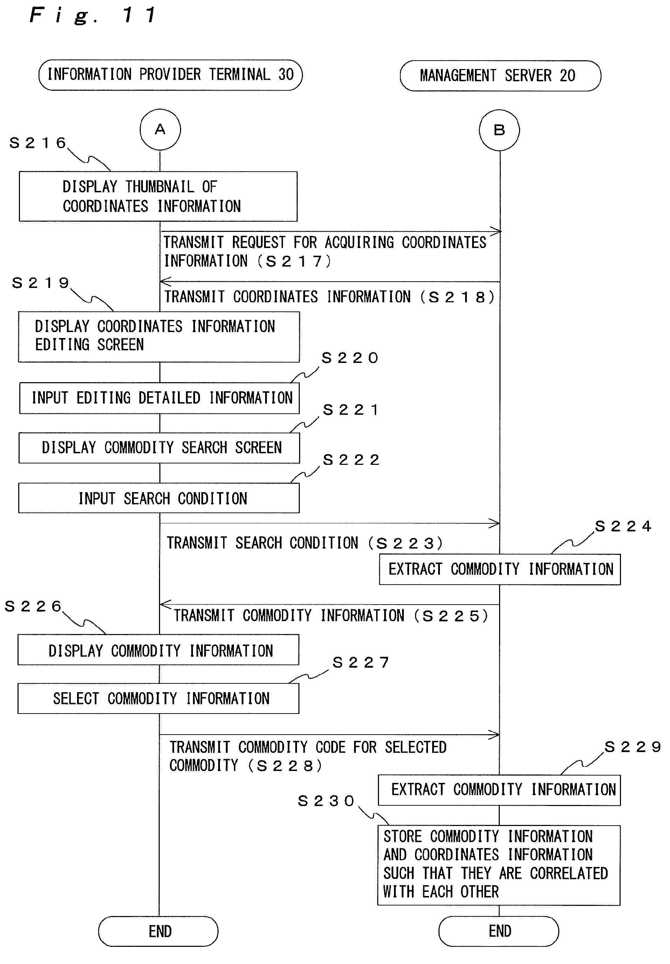

FIGs. 10 and 11 are sequence charts showing flows of an operation of providing coordinates information according to the first embodiment of the present invention.

The operation of providing coordinates information will hereinafter be described, referring to FIGs. 10 and 11.

The information provider starts the application for providing coordinates information, using the information provider terminal 30, and displays a menu screen on the display unit 34 (step S201).

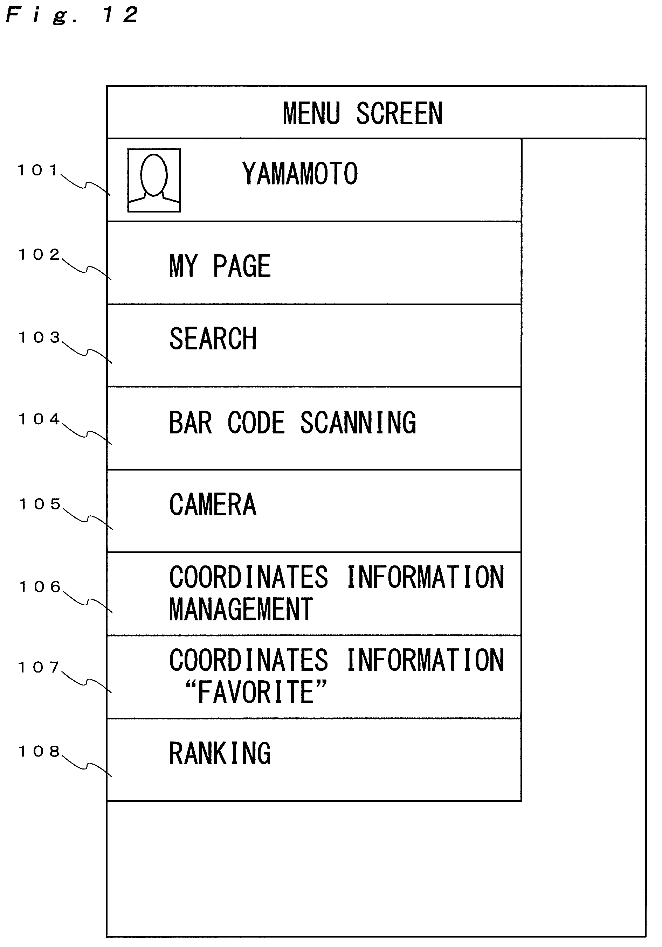

FIG. 12 is a diagram showing an example of the menu screen.

The menu screen may be a common screen displayed by the application installed in the information providing terminal 30 and also by an application (application software) for acquiring commodity information, coordinates information, etc., that is installed in the purchaser terminal 10, which will be described later.

As shown in FIG. 12, a user name 101 and various buttons 102 to 108 are displayed on the menu screen.

The functions of these buttons 102 to 108 will be described. When a my page button 102 is pressed or selected, the menu screen switches to a my page screen for the user using the terminal 10 or terminal 30.

When a search button 103 is pressed or selected, the menu screen switches to a commodity search screen.

When a bar code scanning button 104 is pressed or selected, the terminal reads code information (commodity code) recorded on the commodity code recording medium M attached to a commodity.

When a camera button 105 is pressed or selected on the information providing terminal 30, the photographing unit 36 photographs a coordinates example, etc.

When a coordinates information management button 106 is pressed or selected on the information providing terminal 30, the menu screen switches to a coordinates example (coordinates information) editing screen. The coordinates example editing screen, which will be described later referring to drawings, is a screen on which coordinates information provided by the information provider is input, edited, and managed.

When a favorite coordinates information button 107 is pressed or selected on the purchaser terminal 10, the menu screen switches to a favorite coordinates information screen. The favorite coordinates information screen, which will be described later referring to drawings, is a screen on which coordinate information the purchaser likes or takes interest in is saved and managed.

When a ranking button 108 is pressed or selected, the menu screen switches to a ranking screen. The ranking screen, which will be described later referring to drawings, is a screen displaying a ranking of information providers ranked in the order of the number of pieces of coordinate information they provided that are supported by purchasers as favorite coordinate information.

On the menu screen of FIG. 12, when the information provider selects the camera button 105 using the operation unit 35 (step S202), the camera of the photographing unit 36 is actuated (step S203). Using the camera function of the information provider terminal 30, the information provider photographs a person wearing a commodity, as a coordinates example (step S204).

The information provider terminal 30 stores an image of the photographed coordinates example temporarily in the information storage unit 32 (step S205).

The information provider then selects the coordinates information management button 106 on the menu screen (FIG. 11), using the operation unit 35. As a result, the display unit 34 displays a coordinates information management screen (step S206).

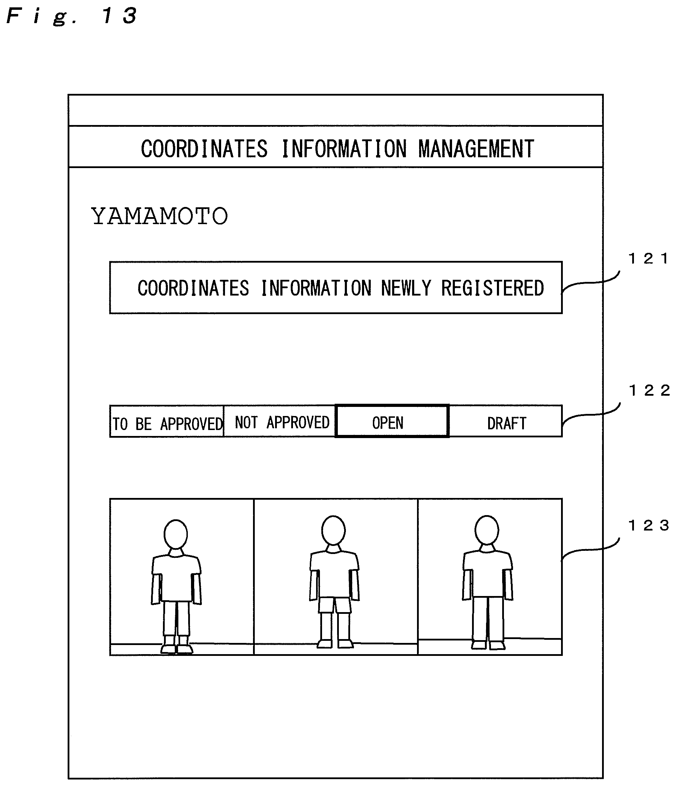

FIG. 13 is a diagram showing an example of the coordinates information management screen.

As shown in FIG. 13, the coordinates information management screen displays a coordinates information newly registering button 121 for newly registering coordinates information, coordinates information state buttons 122 for displaying the state of coordinates information (open or not open to the public on the Web) on the screen, and thumbnail images 123 that are a list of thumbnail images of coordinates information in its state selected by the coordinates information state button 122.

On this coordinates information management screen, when the information provider selects the newly registering button 126 using the operation unit 35, the display unit 34 displays the coordinates information editing screen (step S207).

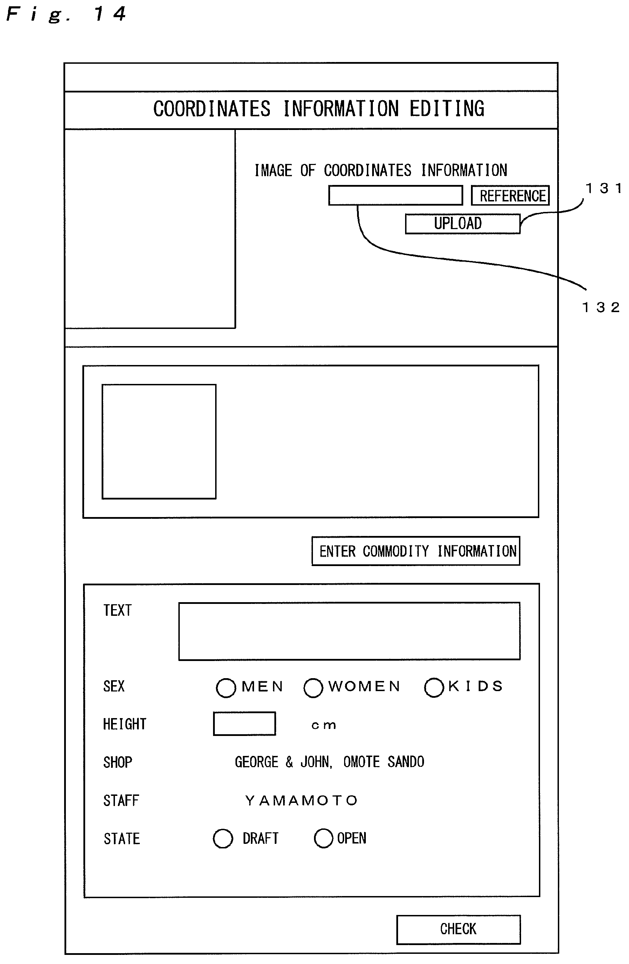

FIG. 14 is a diagram showing an example of the coordinates information editing screen.

As shown in FIG. 14, the coordinates information editing screen displays an image entry space 131 for entering the save location of an image of a coordinates example, and an upload button 132 for uploading an image of a coordinates example saved in a save location entered in the image input space 131, onto the management server 20.

The information provider enters the save location of an image of a photographed coordinates example in the image input space 131, using the operation unit 35 (step S208), and presses the upload button 132. This causes the information provider terminal 30 to correlate the image of the coordinates example saved in the save location with the user ID for the information provider and transmit the image of the coordinates example correlated with the user ID to the management server 20 (step S209).

When receiving the image information of the coordinates example and the user ID for the information provider that are sent from the information provider terminal 30, the management server 20 issues a specific coordinates ID for the received image information (step S210), correlates the issued coordinates ID with the received user ID, and registers the coordinates ID with the coordinates DB 223 of the information storage unit 22, as coordinates information (step S211).

The management server 20 correlates the received image of the coordinates example with the issued coordinates ID and stores the image of the coordinates example in the information storage unit 22, as a coordinates image, and also correlates a thumbnail image created based on the coordinates image with the coordinates ID and stores the thumbnail image in the information storage unit 22 (step S212).

The newly registered coordinate information is not made open to the public on the Web yet and is therefore registered as coordinate information in a state of "draft".

Subsequently, the information provider displays the coordinates information management screen again, using the operation unit 35 (step S213), and selects a "draft" button out of the state buttons 122 on the coordinates information management screen. As a result, the information provider terminal 30 transmits a request for acquiring the coordinate information in the state of "draft", to the management server 20 (step S214).

When receiving the request from the information provider terminal 30 for acquiring the coordinate information, the management server 20 extracts a thumbnail image of the coordinate information in the state of "draft" from the information storage unit 22 and transmits the thumbnail image to the information provider terminal 30 (step S215).

Upon receiving the thumbnail image from the management server 20, the information provider terminal 30 displays the thumbnail images 123 of coordinate information not open to the public on the Web, which includes the above newly registered coordinate information, on the coordinates information management screen (step S216).

When the information provider selects the thumbnail image corresponding to the newly registered coordinates information out of the displayed thumbnail images 123 using the operation unit 35, the information provider terminal 30 transmits a request for acquiring the newly registered coordinates information, to the management server 20 (step S217).

When receiving the request from information provider terminal 30 for acquiring the newly registered coordinates information, the management server 20 extracts the newly registered coordinates information from the information storage unit 22 and transmits the extracted coordinates information to the information provider terminal 30 (step S218).

When receiving the above coordinates information from the management server 20, the information provider terminal 30 displays a coordinates information editing screen for editing the coordinates information, on the display unit 34 (step S219).

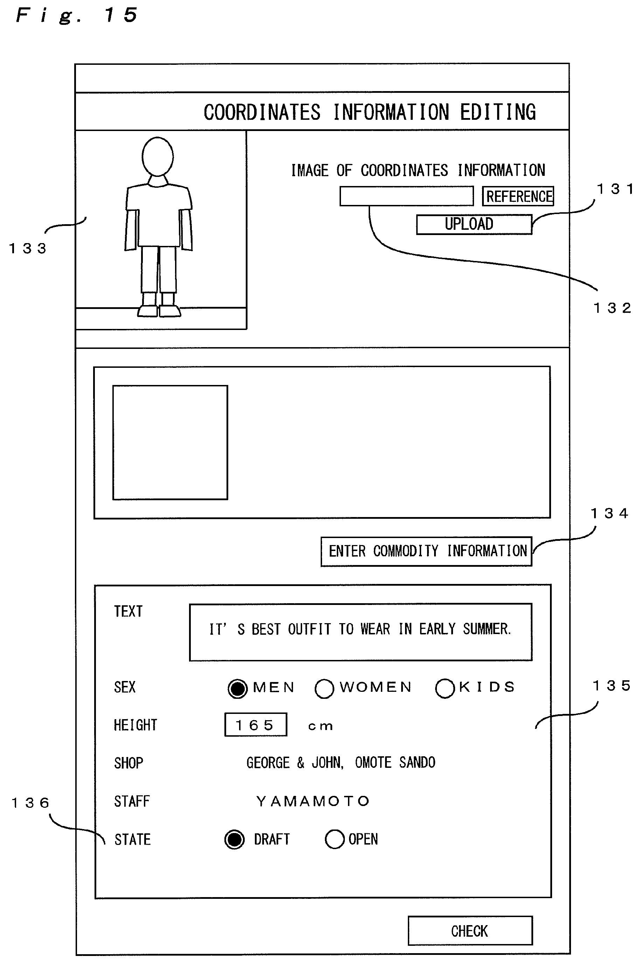

FIG. 15 is a diagram showing an example of the coordinates information editing screen.

As shown in FIG. 15, the coordinates information editing screen displays the image input space 131 and the upload button 132 and also displays a coordinate image 133 correlated with the coordinate ID and stored in the management server 20, a commodity information input button 134 for inputting a commodity worn by a person indicated by the coordinates image, editing detail information 135 that is text information on the coordinate information being edited, and a state information 136 indicating whether the coordinate information has been made open to the public on the Web or not.

As shown in FIG. 15, when an image of a coordinates example is registered with the management server 20, the image of the coordinates example is displayed as the image 133 on the coordinates information editing screen.

Subsequently, the information provider inputs text information on the coordinates information, as the editing detail information 135, using the operation unit 35 (step S220).

The input editing detail information 135 is made up of, for example, the text explaining the contents of the coordinates information, and the sex, height, size, etc., of a coordinates model indicated by the image 133.

The information provider then inputs information of a commodity used for coordinates indicated by the coordinates information.

Specifically, when the information provider selects the commodity information input button 134 using the operation unit 35, the display unit 34 displays a commodity search screen (step S221).

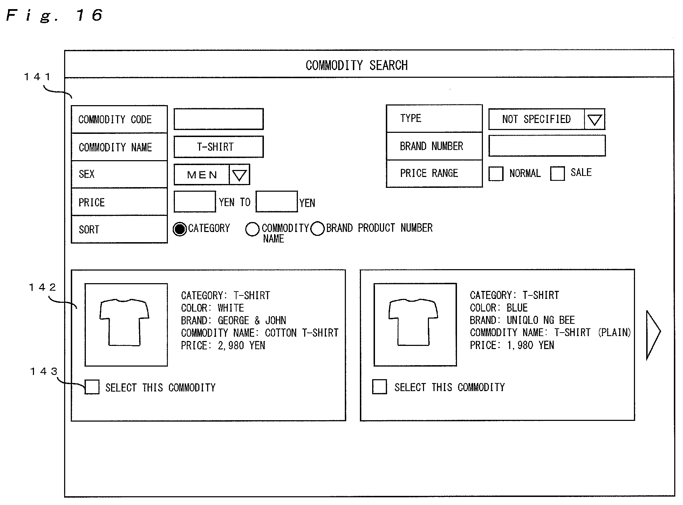

FIG. 16 is a diagram showing an example of the commodity search screen.

As shown in FIG. 16, the commodity search screen displays search condition spaces 141 for entering commodity search conditions, a search result 142 indicating the result of a search made under conditions entered in the search condition spaces 141, and a commodity information selection space 143 for selecting a commodity used in a coordinates example, out of one or more commodities indicated by the search result 142.

In the search condition spaces 141, for example, such search conditions as commodity code, commodity name, sex (male, female, child), price, type, brand product number, and price type (bargain price or not) are entered for commodity searching, as shown in FIG. 16.

The information provider enters search conditions in the search condition spaces 141, using the operation unit 35, on the commodity search screen (step S222), and transmits information of the entered search conditions to the management server 20 (step S223).

When receiving the information of the search conditions from the information provider terminal 30, the management server 20 refers to the commodity DB 222, extracts commodity information meeting the search conditions (step S224), and transmits the extracted commodity information to the information provider terminal 30 (step S225).

When receiving the commodity information from the management server 20, the information provider terminal 30 displays the received commodity information as the search result 142, on the commodity search screen, as shown in FIG. 15 (step S226).

Using the operation unit 35, the information provider selects a commodity used in the latest coordinates example out of one or more commodities displayed as the search result 142 on the commodity search screen, by checking the commodity information selection space 143 (step S227), and transmits the commodity code for the selected commodity to the management server 20 (step S228).

When receiving the commodity code from the information provider terminal 30, the management server 20 extracts the commodity information corresponding to the commodity code from the commodity DB 222, etc. (step S229), and correlates the extracted commodity information with the corresponding coordinates information and registers the commodity information with the coordinates DB 223 (step S230).

In this manner, every time the information provider selects a commodity used in a coordinates example, the management server 20 correlates commodity information with coordinates information and registers the commodity information correlated with the coordinates information.

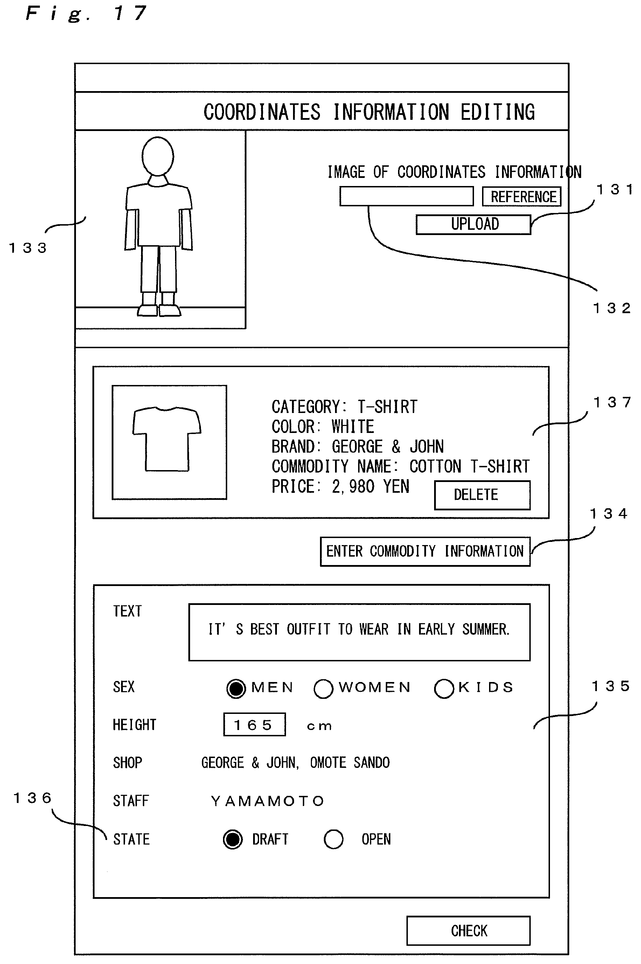

FIG. 17 is a diagram showing an example of the coordinates information editing screen that results following commodity selection.

As shown in FIG. 17, the coordinates information editing screen displays selected commodity information 137 indicating a commodity selected on the commodity search screen.

The above commodity selection is repeated and after the last commodity selection is completed, coordinates information of the selected commodity is uploaded, at which the operation of providing coordinates information comes to an end.

At this time, the state information 136 is updated from "Draft" to "Open".

In this manner, using the information provider terminal 30, the information provider searches for commodity information of a commodity used in a coordinates example, and correlates the retrieved commodity information with a coordinates example image, etc., and registers the commodity information with the management server 20. Through this process, the information provider can provide a purchaser, etc. , with a coordinates example recommended by the information provider, by an extremely easy operation.

According to the embodiment described above, commodity information is acquired by entering keywords, etc., in the search condition spaces 141. However, commodity information may be acquired by another method.

For example, commodity information correlated with coordinates information may be acquired by reading a bar code, etc. , printed on a tag attached to a commodity, using the information reading unit 36 of the information provider terminal 30.

### (3) Operation of Acquiring Commodity Information and Coordinates Information

When coordinates information is registered with the management server 20 in the above manner, a purchaser is able to acquire commodity information of a commodity the purchaser plans to purchase or has purchased as well as coordinates information indicative of coordinates using the commodity, using the purchaser terminal 10.

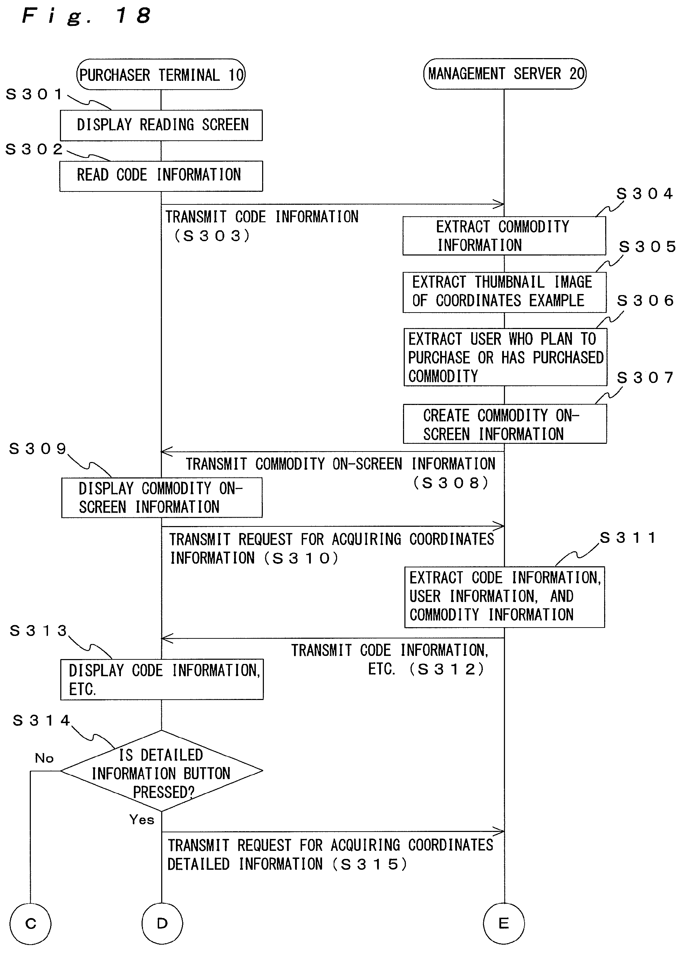

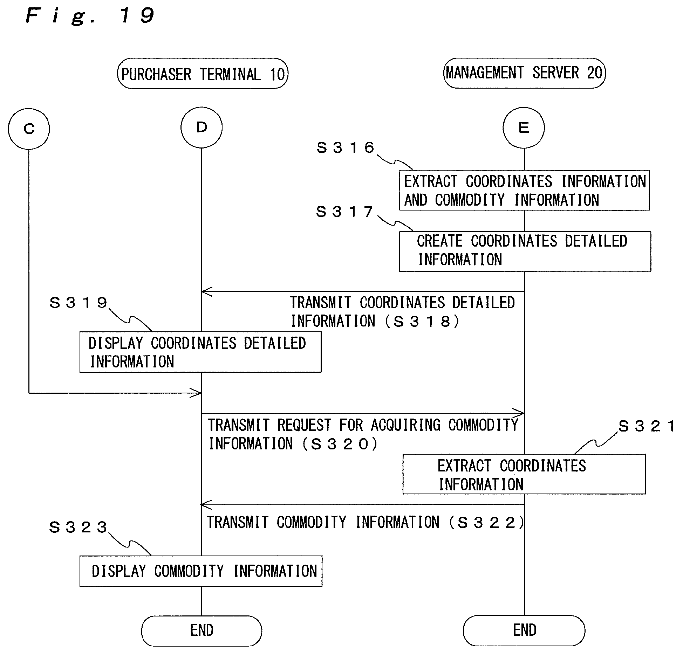

FIGs. 18 and 19 are sequence charts showing flows of an operation of acquiring commodity information and coordinates information according to the first embodiment of the present invention.

The operation of acquiring commodity information and coordinates information carried out by the purchaser will hereinafter be described, referring to drawings.

The purchaser visits a store displaying commodities for sale and operates the purchaser terminal 10 to select the bar code scanning button 104 on the menu screen shown in FIG. 11. As a result, the display unit 14 displays a read screen (step S301).

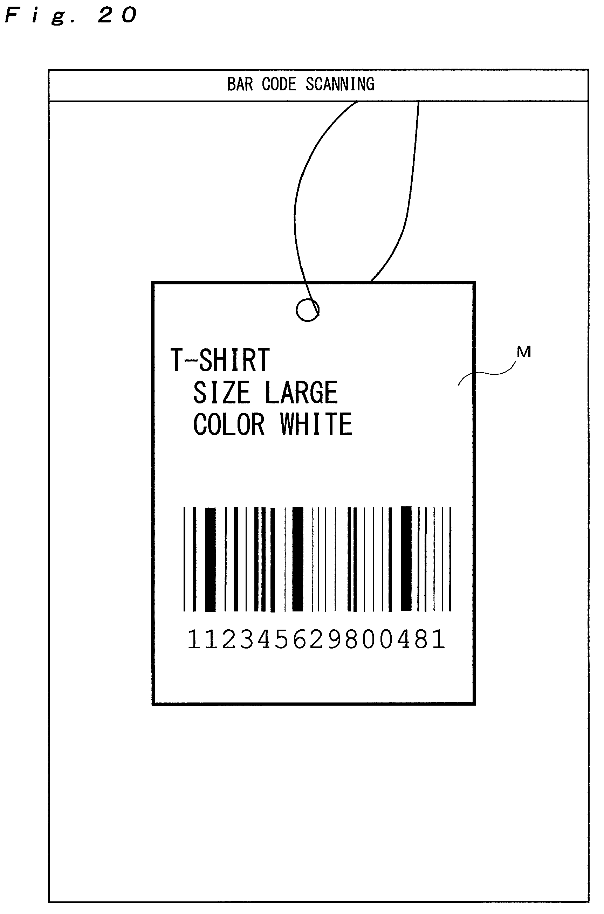

FIG. 20 is a diagram showing an example of the read screen.

As shown in FIG. 20, using the information reading unit 16 of the purchaser terminal 10, the purchaser reads code information (bar code, two-dimensional bar code, text) recorded on the commodity code recording medium M corresponding to a commodity the purchaser plans to purchase (step S302).

The purchaser terminal 10 converts the read code information into a commodity code, and transmits the commodity code to the management server 20 (step S303).

When receiving the commodity code from the purchaser terminal 10, the management server 20 refers to the commodity DB 222 of the information storage unit 22 and extracts commodity information of the commodity identified by the commodity code (step S304), and also refers to the commodity DB 222, coordinates DB 223, etc., and extracts a thumbnail image of a coordinates example in which the commodity is used (step S305).

The management server 20 also refers to the user DB 221, commodity DB 222, etc., extracts a user (WANT) who is examining the commodity identified by the received commodity code for a prospective purchase and a user (BUY) who has purchased the commodity (step S306), and creates screen information of the commodity, using the extracted user information, commodity information, and thumbnail image (step S307).

The management server 20 then transmits the created screen information of the commodity to the purchaser terminal 10 (step S308).

When receiving the screen information of the commodity from the management server 20, the purchaser terminal 10 displays the received screen information of the commodity on the display unit 14 (step S309).

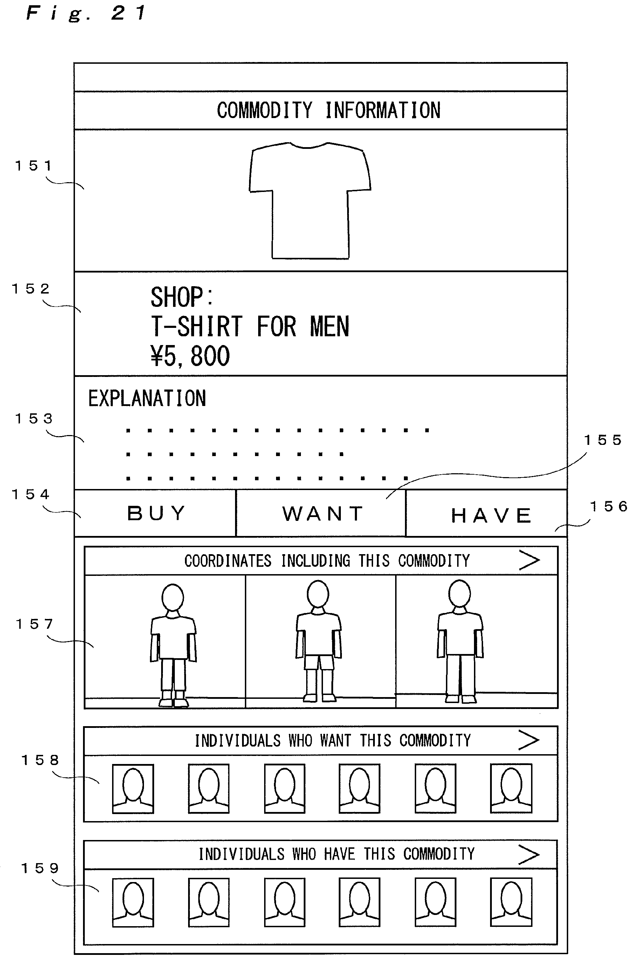

FIG. 21 is a diagram showing an example of a commodity on-screen information display screen.

As shown in FIG. 21, the commodity on-screen information display screen displays an image 151 of a commodity, text information 152 indicative of the name of the commodity, the brand of the commodity or a store selling the commodity, the price of the commodity, etc., commodity details information 153 that gives the details of the commodity, a BUY button 154 that is pressed in the case of purchasing the commodity displayed on the screen, a WANT button 155 that is pressed in the case of examining the commodity displayed on the screen for a prospective purchase, a HAVE button 156 that is pressed in the case of already possessing the commodity displayed on the screen, thumbnail images 157 of coordinates examples using the commodity displayed on the screen, thumbnail images 158 of other users (purchasers) who are examining the commodity displayed on the screen for a prospective purchase, and thumbnail images 159 of other users (purchasers) who already possess the commodity displayed on the screen.

The purchaser, for example, is able to see reference data by referring to the commodity details information 153 or thumbnail images 157 of coordinates examples on the commodity on-screen information display screen.

When the purchaser presses one of the thumbnail images 157 of coordinates examples, using the operation unit 15, the purchaser terminal 10 transmits a request for acquiring coordinates information indicated by the pressed thumbnail image 157, together with the coordinate ID corresponding to the coordinates information, to the management server 20 (step S310).

Upon receiving the coordinate ID and the request for acquiring coordinates information, the management server 20 refers to each of the DBs 221 to 223 and extracts the coordinates information corresponding to the coordinate ID, user information of an information provider who provides the coordinates information, and commodity information of a commodity used in a coordinates example indicated by the coordinates information, from the information storage unit 22 (step S311).

The management server 20 then adds user information, etc., to the extracted coordinates information, and transmits both information to the purchaser terminal 10 (step S312).

Upon receiving the coordinates information with the user information added thereto from the management server 20, the purchaser terminal 10 displays the received information (step S313).

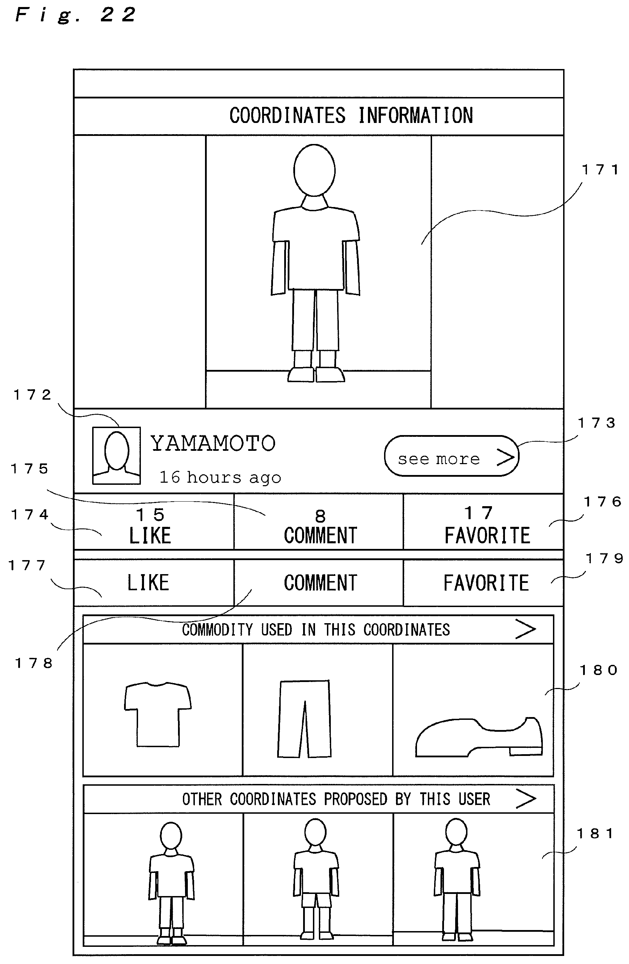

FIG. 22 depicts an example of coordinates information displayed on the purchaser terminal 10.

As shown in FIG. 22, the displayed coordinate information includes an image 171 of an coordinates example, a user icon 172 for an information provider who has provided the coordinates example, a detailed information button 173 that is pressed in the case of switching to coordinates detailed information giving detailed coordinates contents, a like counter 174 that indicates the number of users who have set a high evaluation on the coordinates example, a comment counter 175 that indicates the number of comments made on the coordinates example, a favorite counter 176 that indicates the number of users who have set a high evaluation on the coordinates example and stores the coordinates example in a folder to be able to easily view the coordinates example again and again, a like button 177 that is pressed in the case of setting a high evaluation on the coordinates example, a comment button 178 that is pressed in the case of making a comment on the coordinates example, a favorite button 179 that is pressed in the case of setting a high evaluation on the coordinates example and storing the coordinates example in a folder to be able to easily view the coordinates example again and again, thumbnail images 180 of commodities used in the coordinates example, and thumbnail images 181 of coordinates examples presented by other coordinates information provided by the information provider who has provided the coordinates example.

Viewing the coordinates information (coordinates example) as shown in FIG. 22 allows the purchaser to easily image a combination of the commodity with another commodity the purchaser already possesses or is examining for a prospective purchase. This helps the purchaser in examining a commodity currently sold at the store for a prospective purchase.

When wishing to view more detailed coordinates information (coordinates detailed information), the purchaser presses the detailed information button 173, using the operation unit 15 of the purchaser terminal 10 (step S314/Yes).

In response to the press to the detailed information button 173 (step S314/Yes), the purchaser terminal 10 transmits a request for acquiring coordinates detailed information, together with the coordinates ID corresponding to the coordinates detailed information, to the management server 20 (step S315).

Upon receiving the request for acquiring coordinates detailed information, etc., the management server 20 refers to each of the DBs 221 to 223, extracts the coordinates information corresponding to the coordinate ID and commodity information correlated with the coordinates information, from the information storage unit 22 (step S316), creates coordinates detailed information based on the extracted information (step S317), and transmits the created coordinates detailed information to the purchaser terminal 10 (step S318).

When receiving the coordinates detailed information from the management server 20, the purchaser terminal 10 displays the coordinates detailed information on the display unit 14 (step S319).

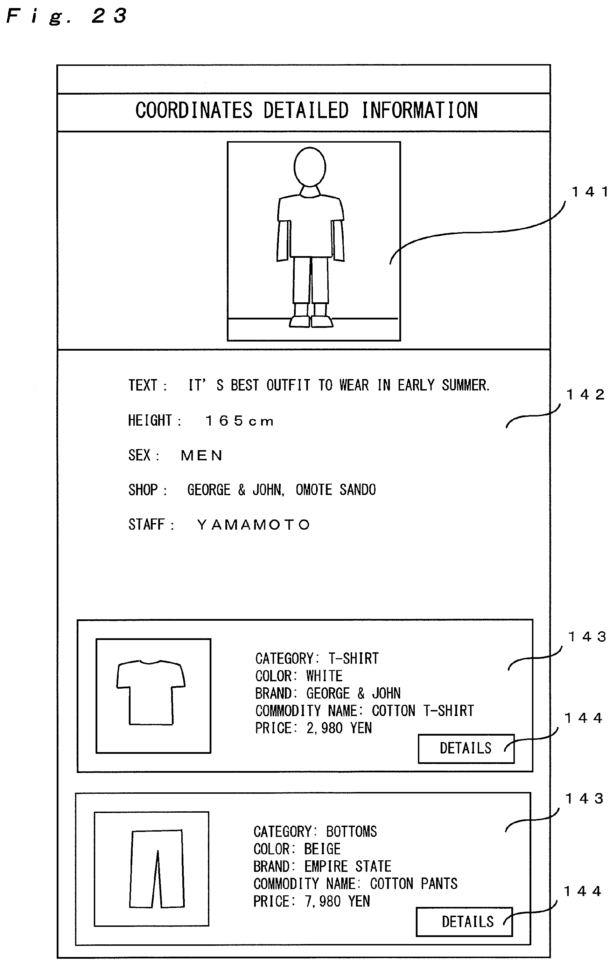

FIG. 23 depicts an example of the displayed coordinates detailed information.

As shown in FIG. 23, the displayed coordinates detailed information includes an image 191 of a coordinates example, text information 192 of the coordinates example, the text information indicating, for example, an explanation, the height and sex of a person shown as the coordinates example image 141, and the account, post, etc., of an information provider, information (commodity information) 193 of a commodity used in the coordinates example image 141, a commodity details display button 194 for displaying the details of the commodity information 143, and a comment input button 195 for inputting an evaluative comment on the coordinates example.

By referring to the coordinates detailed information shown in FIG. 23, the purchaser is able to use it as reference data that helps the purchaser in coordinates and commodity purchase, and is therefore able to purchase a commodity fitting in with the purchaser.

When the purchaser selects one of the thumbnail images 180 of commodity of the coordinates information or one of one or more commodities displayed by the commodity details display button 194 of the coordinates detailed information, using the operation unit 15 of the purchaser terminal 10, the purchaser terminal 10 transmits a request for acquiring commodity information of the selected commodity, together with the commodity code for the commodity, to the management server 20 (step S320).

When receiving the request for acquiring commodity information, etc., the management server 20 extracts the commodity information corresponding to the received commodity code, from the information storage unit 22 (step S321), and transmits the extracted commodity information to the purchaser terminal 10 (step S322).

When receiving the commodity information, the purchaser terminal 10 displays the commodity information on the display unit 14 (step S323).

The displayed commodity information is a kind of commodity information shown in FIG. 21.

In this manner, the purchaser can acquire not only the detailed information of a commodity sold at the store but also detailed information of a commodity to wear in combination with the commodity. For example, the purchaser can acquire not only the information of a T-shirt sold at the store but also information of a hat coordinated with the T-shirt.

The operation of acquiring commodity information and coordinates information is completed in the above manner.

As described above, by reading a commodity code attached to a commodity actually sold at the store, using the purchaser terminal 10, the purchaser can easily acquire not only the detailed information of the commodity but also information of a coordinates example using the commodity and a different commodity used in the coordinates example. This assists the purchaser in purchasing a proper commodity.

According to the embodiment described above, the purchaser acquires commodity information and coordinates information by reading a commodity code attached to a commodity actually sold at the store, using the purchaser terminal 10. The purchaser, however, can acquire the commodity information and coordinates information by a different method.

For example, as described above, the purchaser selects the commodity search screen (FIG. 16) on the menu screen (FIG. 12), using the operation unit 15, to display the commodity search screen, on which the purchaser specifies a commodity and acquire commodity information and coordinates information on the specified commodity.

### (4) Operation of Acquiring Different Coordinates Information

As described above, using the purchaser terminal 10, the purchaser views commodity information of a commodity sold at a store and coordinates information indicative of a coordinates example using the commodity, thereby uses the viewed information as reference data that helps the purchaser in commodity purchase.

When the purchaser likes the viewed coordinates example, the purchaser can view a different coordinates example provided by an information provider who has provided the coordinates example.

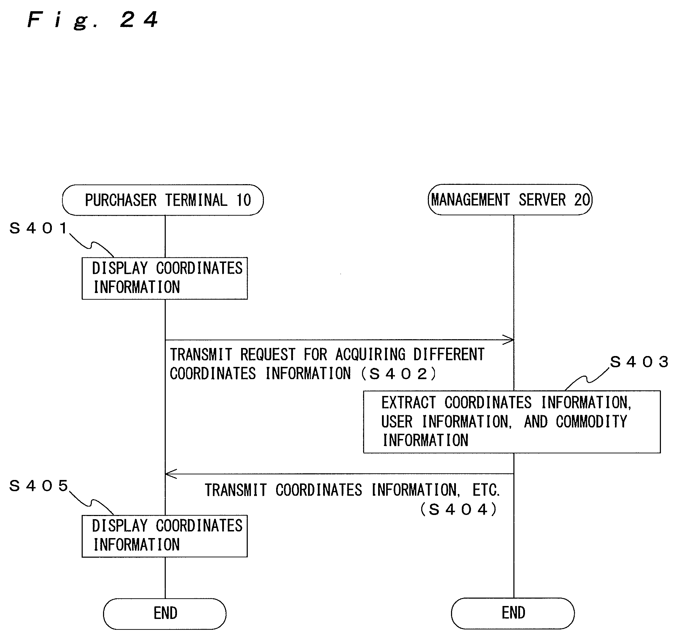

FIG. 24 is a sequence chart showing a flow of an operation of acquiring different commodity information.

The operation of acquiring different commodity information will hereinafter be described, referring to FIG. 24.

The purchaser first displays the coordinates information of FIG. 22 by the above method (step S401).

The screen of this coordinates information displays one or more thumbnail images 181 of different coordinates examples provided by an information provider who has provided the coordinates information.

The purchaser selects one of the one or more thumbnail images 181 of different coordinates examples, using the operation unit 15 of the purchaser terminal 10. As a result, the purchaser terminal 10 transmits a request for acquiring coordinates information corresponding to the selected thumbnail image 181, together with the coordinates ID for the coordinates information, to the management server 20 (step S402).

When receiving the request for acquiring coordinates information, etc., the management server 20 refers to each of the DBs 221 to 223, and extracts the coordinates information identified by the received coordinates ID, user information of the information provider who provides the coordinates information, and commodity information of a commodity used in the coordinates example indicated by the coordinates information, from the information storage unit 22 (step S403).

The management server 20 then adds the user information and commodity information to the extracted coordinates information and transmits those pieces of information to the purchaser terminal 10 (step S404).

When receiving the coordinates information with the user information, etc., added thereto from the management server 20, the purchaser terminal 10 displays the coordinates information with the user information, etc., added thereto (step S405).

The displayed coordinates information is similar to the coordinates information shown in FIG. 22.

In this manner, the purchaser can view not only the coordinates information on a commodity sold at the store but also a different coordinates example provided by an information provider who provides a coordinates example that pleases the purchaser. The purchaser thus uses the viewed information as reference data that helps the purchaser in commodity purchase.

### (5) Operation of Evaluating Coordinates Example

As described above, the coordinates information (FIG. 22) includes evaluations of a coordinates example, such as "Like", "Comment", and "Favorite".

An operation carried out by the coordinates information providing system when a user evaluates a coordinates example provided by an information provider will hereinafter be described, referring to FIG. 22.

### (5.1) Operation of Making Evaluation "Like"

As described above, according to this embodiment, a coordinates example is evaluated to make three kinds of evaluations "Like", "Comment", and "Favorite".

An operation of making an evaluation "Like" out of the three kinds of evaluations will first be described.

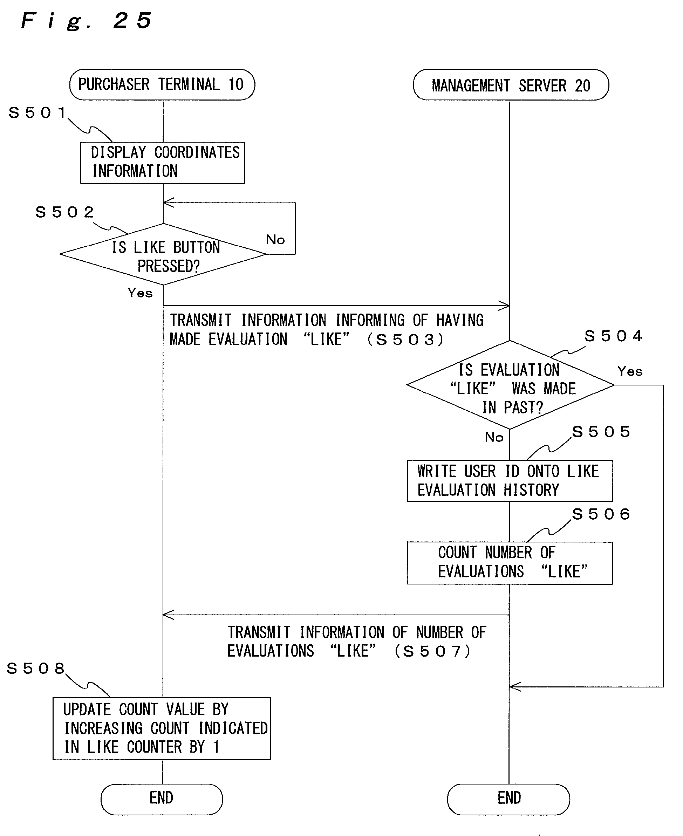

FIG. 25 is a sequence chart showing a flow of an operation that is carried out when a coordinates example provided by an information provider is evaluated as "like".

The operation of making the evaluation "Like" will hereinafter be described, referring to FIG. 25.

The purchaser first displays the coordinates information of FIG. 22 by the above method (step S501).

The purchaser views the coordinates information and when setting a high evaluation on a coordinates example indicated by the coordinates information, press the like button 177, using the operation unit 15 of the purchaser terminal 10 (step S502/Yes).

When the like button 177 is pressed (step S502/Yes), the purchaser terminal 10 transmits information informing of the press to the like button 177, together with the coordinates ID for the coordinates information and the user ID for the purchaser, to the management server 20 (step S503).

When receiving those pieces of information from the purchaser terminal 10, the management server 20 refers to the "Like" evaluation history in the coordinates DB 223, and determines whether the purchaser identified by the user ID evaluated the coordinates example identified by the coordinates ID, as "Like" in the past (step S504).

When the "Like" evaluation history corresponding to the coordinates ID in the coordinates DB 223 includes the user ID for the purchaser having pressed the like button 177 (step S504/Yes), that is, when the management server 20 determines that the purchaser already evaluated the coordinates example as "Like" in the past, the management server ends the operation at that point.

When the "Like" evaluation history corresponding to the coordinates ID in the coordinates DB 223 does not include the user ID for the purchaser (step S504/No), that is, when the management server 20 determines that the purchaser did not evaluate the coordinates example as "Like" in the past, the management server 20 writes the user ID for the purchaser correlated with information of the current date, onto the "Like" evaluation history corresponding to the coordinates ID in the coordinates DB 223 (step S505).

The management server 20 then counts the number of evaluations "Like" included in the "Like" evaluation history corresponding to the coordinates ID in the coordinates DB 223 (step S506), and transmits information of the number of evaluations "Like" to the purchaser terminal 10 (step S507).

When receiving the information of the number of evaluations "Like" from the management server 20, the purchaser terminal 10 increases a count indicated in the like counter 174 displayed on the screen of coordinates information, by 1 (step S508).

In this manner, on the screen of the coordinate information, the like counter 174 displays the number of evaluations "Like" made. The purchaser, therefore, is able to confirm how many users have set a high evaluation on the coordinates example and to easily see at a glance what coordinates example is currently in fashion.

### (5.2) Operation of Making Evaluation "Comment"

An operation of making an evaluation "Comment" will then be described.

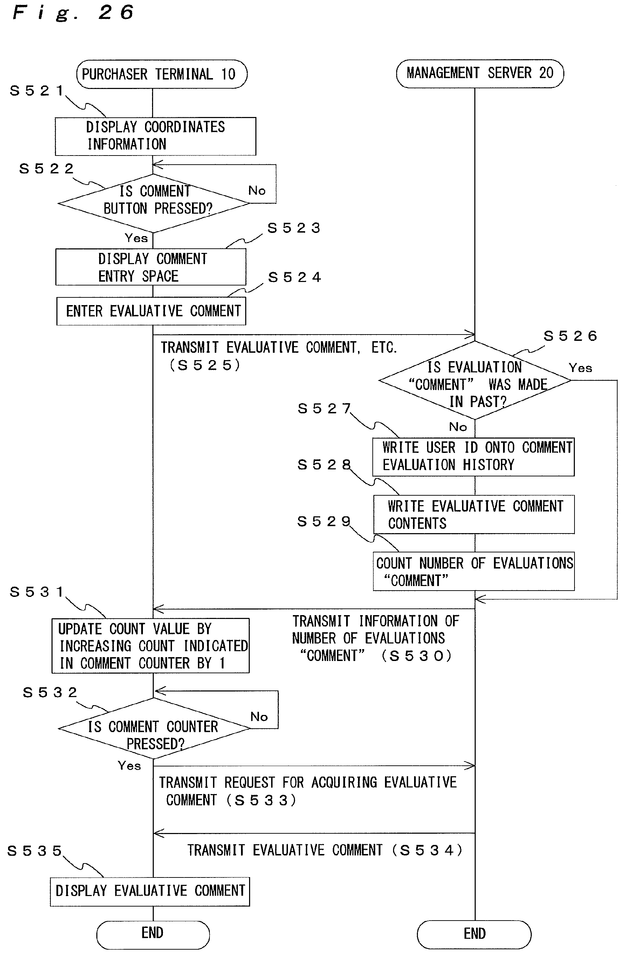

FIG. 26 is a sequence chart showing a flow of an operation that is carried out when a coordinates example provided by an information provider is evaluated as "comment".

The operation of making the evaluation "Comment" will hereinafter be described, referring to FIG. 26.

The purchaser first displays the coordinates information of FIG. 22 by the above method (step S521).

The purchaser views the coordinates information and when making a comment on the coordinates example indicated by the coordinates information, press the comment button 178, using the operation unit 15 of the purchaser terminal 10 (step S522/Yes).

When the comment button 178 is pressed (step S522/Yes), the purchaser terminal 10 displays a comment entry space (not depicted) (step S523).

Using the operation unit 175, the purchaser enters an evaluative comment on the coordinates example, in the comment entry space (step S524).

Subsequently, the purchaser terminal 10 transmits the entered evaluative comment, together with the coordinates ID for the coordinates information and the user ID for the purchaser, to the management server 20 (step S525).

When receiving those pieces of information from the purchaser terminal 10, the management server 20 refers to the "Comment" evaluation history in the coordinates DB 223, and determines whether the purchaser identified by the user ID evaluated the coordinates example identified by the coordinates ID, as "Comment" in the past (step S526).

When the "Comment" evaluation history corresponding to the coordinates ID in the coordinates DB 223 includes the user ID for the purchaser having pressed the comment button 177 (step S526/Yes), that is, when the management server 20 determines that the purchaser already evaluated the coordinates example as "Comment" in the past, the management server 20 ends the operation at that point.

When the "Comment" evaluation history corresponding to the coordinates ID in the coordinates DB 223 does not include the user ID for the purchaser (step S526/No), that is, when the management server 20 determines that the purchaser did not evaluate the coordinates example as "Comment" in the past, the management server 20 writes the user ID for the purchaser correlated with information of the current date, onto the "Comment" evaluation history corresponding to the coordinates ID in the coordinates DB 223 (step S527).

The management server 20 also writes the evaluative comment contents correlated with the user ID for the purchaser having made the comment, onto the coordinates DB 223 (step S528).

The management server 20 then counts the number of evaluations "Comment" included in the "Comment" evaluation history corresponding to the coordinates ID in the coordinates DB 223 (step S529), and transmits information of the number of evaluations "Comment" to the purchaser terminal 10 (step S530).

When receiving the information of the number of evaluations "Comment" from the management server 20, the purchaser terminal 10 increases a count indicated in the comment counter 174 displayed on the screen of coordinates information, by 1 (step S531).

When the purchaser presses the comment counter 175, using the operation unit 175 (step S532/Yes), the purchaser terminal 10 transmits a request for acquiring an evaluative comment, together with the coordinates ID corresponding to the evaluative comment, to the management server 20 (step S533).

When receiving the request for acquiring an evaluative comment, etc., the management server 20 extracts the evaluative comment corresponding to the received coordinates ID, from the coordinates DB 223 and transmits the extracted evaluative comment to the purchaser terminal 10 (step S534).

When receiving the evaluative comment from the management server 20, the purchaser terminal 10 displays the received evaluative comment on the display unit 14 (step S535).

The display unit 14 displays evaluative comments made on the coordinates example identified by the coordinates ID as well as the above evaluative comment entered by the purchaser.

In this manner, on the screen of the coordinates information, the number of evaluations "Comment" made is indicated in the comment counter 175 and the contents of evaluative comments can be checked. The purchaser, therefore, can easily understand how much interest users take in a coordinates example on which those comments are made and what evaluations users have made on the coordinates example, thereby use the understood information as reference data that helps the purchaser in commodity purchase and coordinates.

### (5.3) Operation of Making Evaluation "Favorite"

An operation of making an evaluation "favorite" will then be described.

Coordinates information evaluated to be "Favorite" can be viewed easily on the above my page by a click. By evaluating coordinates information to view repeatedly as "Favorite", therefore, the purchaser makes coordinates information management easier.

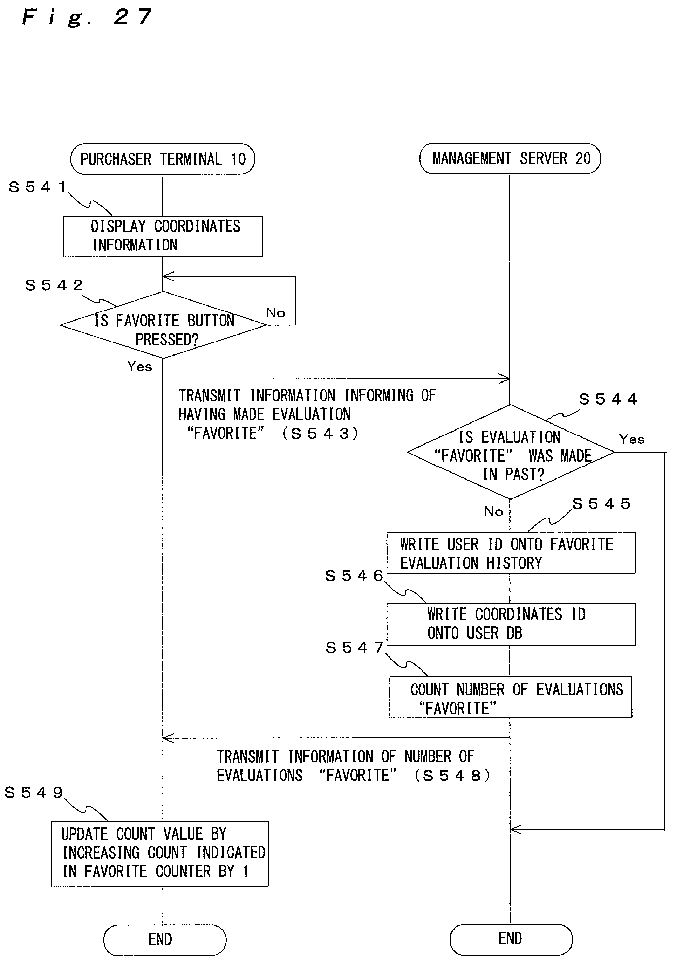

FIG. 27 is a sequence chart showing a flow of an operation that is carried out when a coordinates example provided by an information provider is evaluated as "favorite".

The operation of making an evaluation "Favorite" will hereinafter be described, referring to FIG. 27.

The purchaser first displays the coordinates information of FIG. 22 by the above method (step S541).

The purchaser views the coordinates information and when wishing to manage the coordinates information as information in the favorite category on the my page, presses the favorite button 179, using the operation unit 15 of the purchaser terminal 10 (step S542/Yes).

When the favorite button 179 is pressed (step S542/Yes), the purchaser terminal 10 transmits information informing of the press to the favorite button 179, together with the coordinates ID for the coordinates information and the user ID for the purchaser, to the management server 20 (step S543).

When receiving those pieces of information from the purchaser terminal 10, the management server 20 refers to the "Favorite" evaluation history in the coordinates DB 223, and determines whether the purchaser identified by the user ID evaluated the coordinates example identified by the coordinates ID, as "Favorite" in the past (step S544).

When the "Favorite" evaluation history corresponding to the coordinates ID in the coordinates DB 223 includes the user ID for the purchaser having pressed the favorite button 177 (step S544/Yes), that is, when the management server 20 determines that the purchaser already evaluated the coordinates example as "Favorite" in the past, the management server 20 ends the operation at that point.

When the "Favorite" evaluation history corresponding to the coordinates ID in the coordinates DB 223 does not include the user ID for the purchaser (step S544/No), that is, when the management server 20 determines that the purchaser did not evaluate the coordinates example as "Favorite" in the past, the management server 20 writes the user ID for the purchaser correlated with information of the current date, onto the "Favorite" evaluation history space corresponding to the coordinates ID in the coordinates DB 223 (step S545).

The management server 20 also writes the coordinates ID onto the "Favorite" coordinate space corresponding to the user ID for the purchaser in the user DB 221 (step S546).

In this manner, the user ID for the purchaser and the coordinates ID specified as "Favorite" are correlated with each other and are managed in the DBs 221 and 223. Hence the purchaser can easily acquire favorite coordinates information from the my page.

The management server 20 then counts the number of evaluations "Favorite" included in the "Favorite" evaluation history space corresponding to the coordinates ID in the coordinates DB 223 (step S546), and transmits information of the number of evaluations "Favorite" to the purchaser terminal 10 (step S547).

When receiving the information of the number of evaluations "Favorite" from the management server 20, the purchaser terminal 10 increases a count indicated in the favorite counter 174 displayed on the screen of the coordinates information, by 1 (step S548).

In this manner, on the screen of the coordinates information, the favorite counter 176 displays the number of evaluations "Favorite" made. The purchaser, therefore, is able to confirm how many users have set a high evaluation on the coordinates example and to easily see at a glance what coordinates example is currently in fashion.

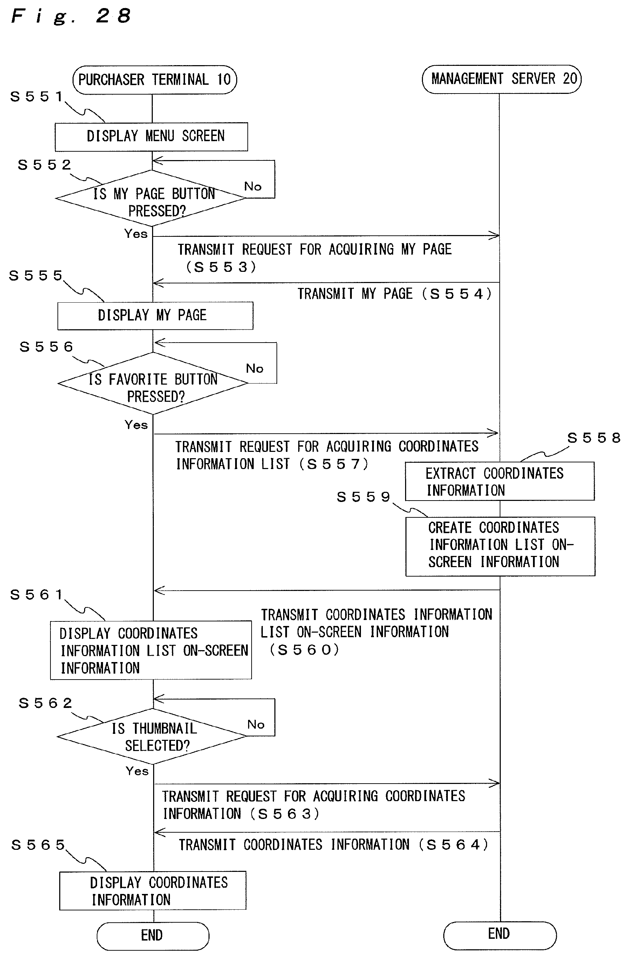

An operation of viewing coordinates information managed as favorite information will then be described. FIG. 28 is a sequence chart showing a flow of the operation of viewing coordinates information managed as favorite information.

The operation will hereinafter be described, referring to FIG. 28.

As described above, the purchaser displays the menu screen (FIG. 12) on the display unit 14, using the operation unit 15 of the purchaser terminal 10 (step S551). The purchaser then presses the my page button 102 on the menu screen, using the operation unit 15 (step S552/Yes). In response to this, the purchaser terminal 10 transmits a request for acquiring the purchaser's my page, together with the user ID for the purchaser, to the management server 20 (step S553).

When receiving the request for acquiring the my page and the user ID from the purchaser terminal 10, the management server 20 extracts the my page corresponding to the user ID from the information storage unit 22, and transmits the extracted my page to the purchaser terminal 10 (step S554).

When receiving the my page from the management server 20, the purchaser terminal 10 displays the my page on the display unit 14 (step S555).

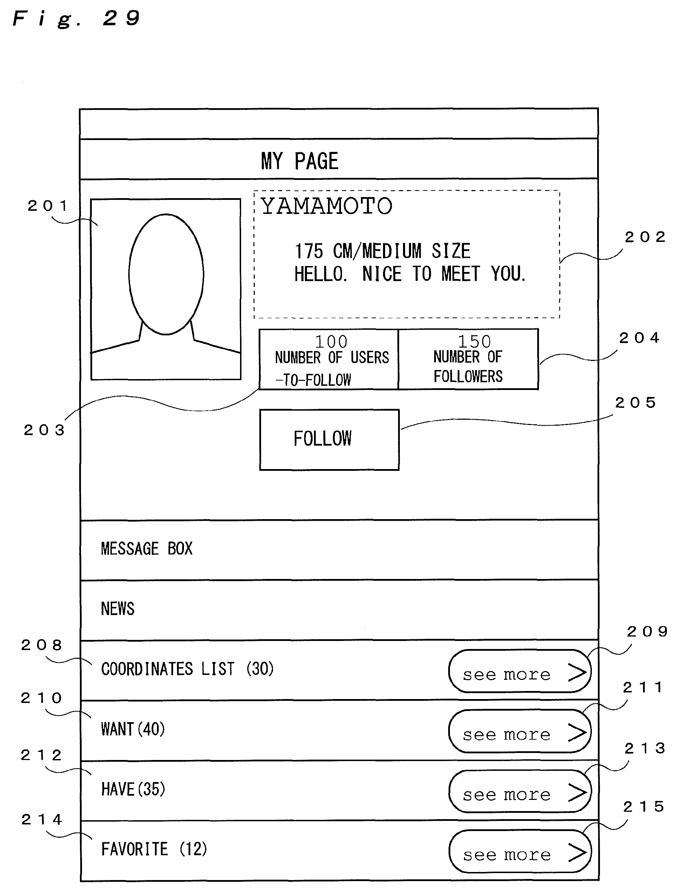

FIG. 29 is a diagram showing an example of the my page. This my page is created commonly for both purchaser and information provider.

As shown in FIG. 29, the my page displays a user icon 201, a profile 202 showing the user's account, height, size, self-introduction, etc., number-of-followed-users 203 representing the number of other users whom the user supports, number-of-followers 204 representing the number of other users who support the user, a follow button 205 that is pressed in the case of supporting the user, a coordinates list counter 208 indicating the number of pieces of coordinates information provided by the user (information provider), a coordinate list button 209 that is pressed in the case of displaying a list of pieces of the coordinates information, a WANT counter 210 indicating the number of commodities the user plans to purchase, a WANT list button 211 that is pressed in the case of displaying a list of the commodities the user plans to purchase, a HAVE counter 212 indicating the number commodities the user actually has purchased, a HAVE list button 213 that is pressed in the case of displaying a list of the purchased commodities, a favorite counter 214 indicating the number of pieces of information evaluated as "Favorite" in the above manner, and a favorite button 215 that is pressed in the case of displaying a list of the pieces of information evaluated as "Favorite".

On the my page displayed in the above manner, the purchaser presses the favorite button 215, using the operation unit 15 (step S556/Yes). In response to this, the purchaser terminal 10 transmits a request for acquiring a list of pieces of coordinates information evaluated by the purchaser as "Favorite" in the above manner, together with the user ID for the purchaser, to the management server 20 (step S557).

When receiving the request for acquiring the list of pieces of coordinates information, etc., from the purchaser terminal 10, the management server 20 refers to the user DB 221 and coordinates DB 223, extracts coordinates information identified by the coordinates ID correlated with the received user ID, as coordinates information evaluated as "Favorite", from the information storage unit 22 (step S558), creates coordinates information list on-screen information, based on the extracted coordinates information (step S559), and transmits the created coordinates information list on-screen information to the purchaser terminal 10 (step S560).

When receiving the coordinates information list on-screen information, the purchaser terminal 10 displays the coordinates information list on-screen information on the display unit 14 (step S561).

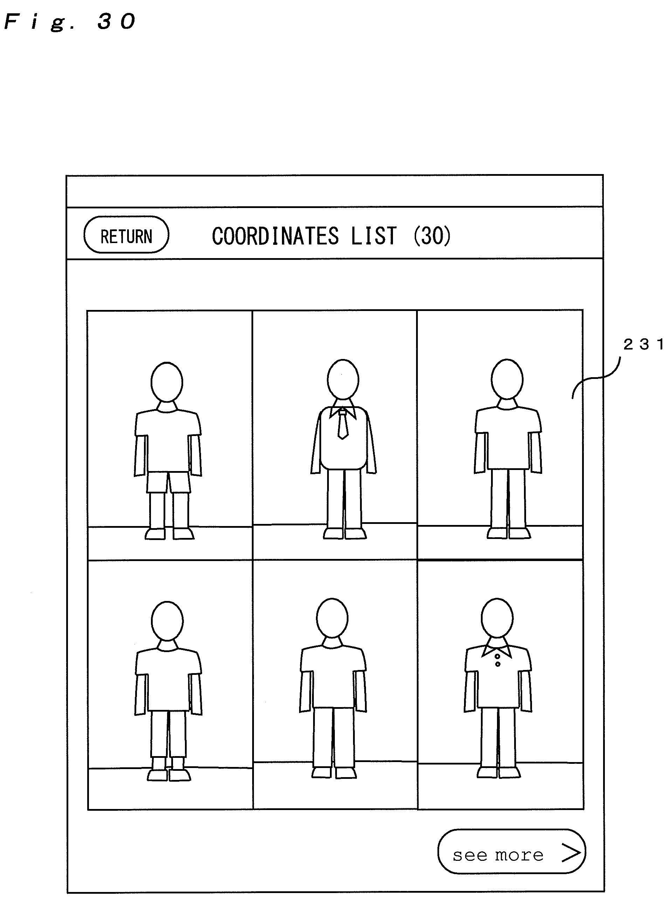

FIG. 30 is a diagram showing an example of the coordinates information list on-screen information.

As shown in FIG. 30, the screen of the coordinates information list on-screen information displays thumbnail images 231 of coordinates examples of coordinates information evaluated by the purchaser as "Favorite".

When the purchaser selects one of one or more thumbnail images 221 on the screen of the coordinates information list on-screen information, using the operation unit 15 (step S562/Yes), the purchaser terminal 10 transmits a request for acquiring the selected coordinates information (thumbnail image), together with the coordinates ID for the coordinates information, to the management server 20 (step S563).

When receiving the request for acquiring the selected coordinates information, etc., the management server 20 extracts the coordinates information from the information storage unit 22 and transmits the extracted coordinates information to the purchaser terminal 10 (step S564).

Upon receiving the coordinates information from the management server 20, the purchaser terminal 10 displays the coordinates information on the display unit 14 (step S565).

The displayed coordinates information is similar to the coordinates information shown in FIG. 22.

In this manner, the purchaser can display coordinates information evaluated as "Favorite", through a link from the my page. The purchaser, therefore, can easily refer to coordinates information to view repeatedly and use the coordinates information as reference data that helps the purchaser in commodity purchase.

### (5.4) Operation of Making Evaluations in General

The operations of making evaluations "Like", "Comment", and "Favorite" have been described as examples in which the purchaser makes evaluations using the purchaser terminal 10. However, an information provider may make evaluations using the information provider terminal 30.

### (6) Operation of Evaluating Commodity

### (6.1) Operation of Registering Commodity Purchaser Plan to Purchase or Has Purchased

As described above, the purchaser refers to commodity information and coordinates information to use the information as reference data that helps the purchaser in commodity purchase.

Having examining commodities for a prospective purchase, the purchaser registers a commodity the purchaser plans to purchase or a commodity the purchaser has purchased, with the user DB 221 of the management server 20.

By registering a commodity with the user DB 221, the purchaser is able to check the commodity and a coordinates example using the commodity, through a link from the my page.

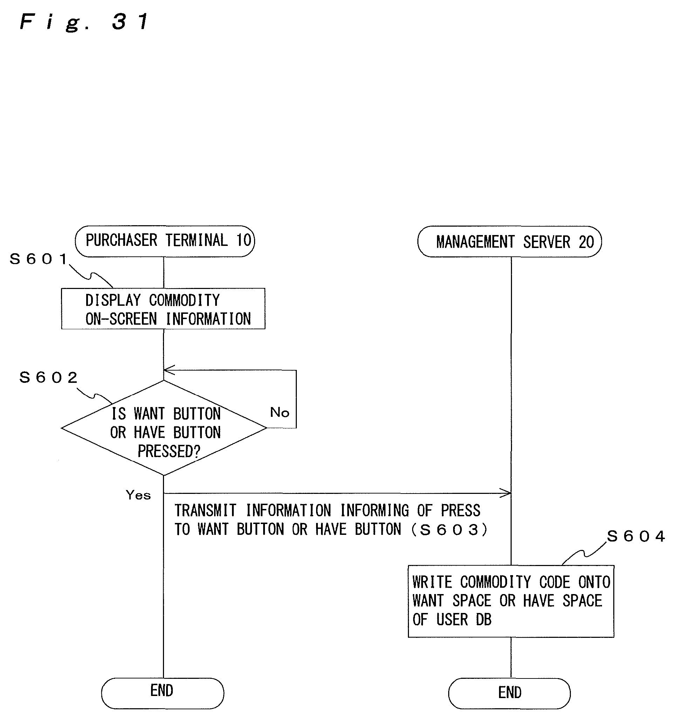

FIG. 31 is a sequence chart showing a flow of an operation that is carried out when a commodity the purchaser plans to purchase or has purchased is registered with the user DB 221 of the management server 20.

The operation will hereinafter be described, referring to FIG. 31.

The purchaser, as described above, first displays the commodity on-screen information (FIG. 21), using the operation unit 15 of the purchaser terminal 10 (step S601).

The commodity on-screen information is displayed by the methods described above. For example, it is displayed by reading a commodity code, using the purchaser terminal 10, at the store or selecting a thumbnail image, etc., from the coordinates information or coordinates detailed information.

Subsequently, using the operation unit 15, the purchaser presses the WANT button 155 when planning to purchase a commodity shown on the commodity on-screen information (FIG. 21), while presses the HAVE button 156 when having purchased the commodity (step S602/Yes).

In response to this (step S602/Yes), the purchaser terminal 10 transmits the commodity code for the commodity shown on the on-screen information, together with the user ID for the purchaser and information informing of the press to the WANT button 155 or HAVE button 156, to the management server 20 (step S603).

When receiving those pieces of information from the purchaser terminal 10, the management server 20 writes the received commodity code onto the WANT space or HAVE space corresponding to the received user ID in the user DB 221, according to the type of the button pressed (step S604).

In the above manner, the commodity the purchaser plans to purchase or has purchased is managed by the user DB 221.

### (6.2) Operation of Checking Commodity Purchaser Plan to Purchase or Has Purchased

A commodity the purchaser plans to purchase or has purchased that is registered in the above manner can be checked in the following manner.

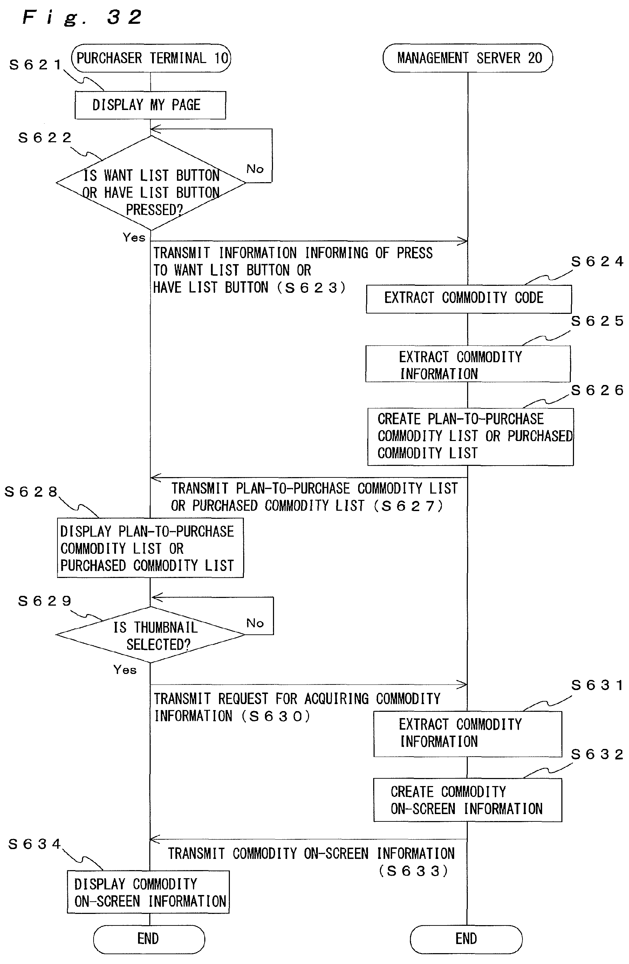

FIG. 32 is a sequence chart showing a flow of an operation that is carried out when a commodity the purchaser plans to purchase or has purchased is checked.

The operation will hereinafter be described, referring to FIG. 32.

The purchaser, as described above, first displays the my page (FIG. 29), using the operation unit 15 of the purchaser terminal 10 (step S621).

Subsequently, using the operation unit 15, the purchaser presses the WANT list button 211 on the my page (FIG. 29) when viewing a list of commodities the purchaser plans to purchase (plan-to-purchase commodity list), while presses the HAVE list button 213 on the my page (FIG. 29) when viewing a list of commodities the purchaser has purchased (purchased commodity list) (step S622/Yes).

In response to this (step S622/Yes), the purchaser terminal 10 transmits the user ID for the purchaser and information informing of the press to the WANT list button 211 or HAVE list button 213, to the management server 20 (step S623).

When receiving those pieces of information from the purchaser terminal 10, the management server 20 extracts one or more commodity codes from the WANT space or HAVE space correlated with the received user ID in the user DB 221, according to the type of the button pressed (step S624), and extracts one or more pieces of commodity information correlated with the extracted commodity codes, from the commodity DB 222, etc. (step S625).

The management server 20 then creates a plan-to-purchase commodity list or purchased commodity list, based on the extracted one or more pieces of commodity information (step S626).

The management server 20 transmits the created plan-to-purchase commodity list or purchased commodity list to the purchaser terminal 10 (step S627).

Upon receiving the plan-to-purchase commodity list or purchased commodity list, the purchaser terminal 10 displays the list on the display unit 14 (step S628).

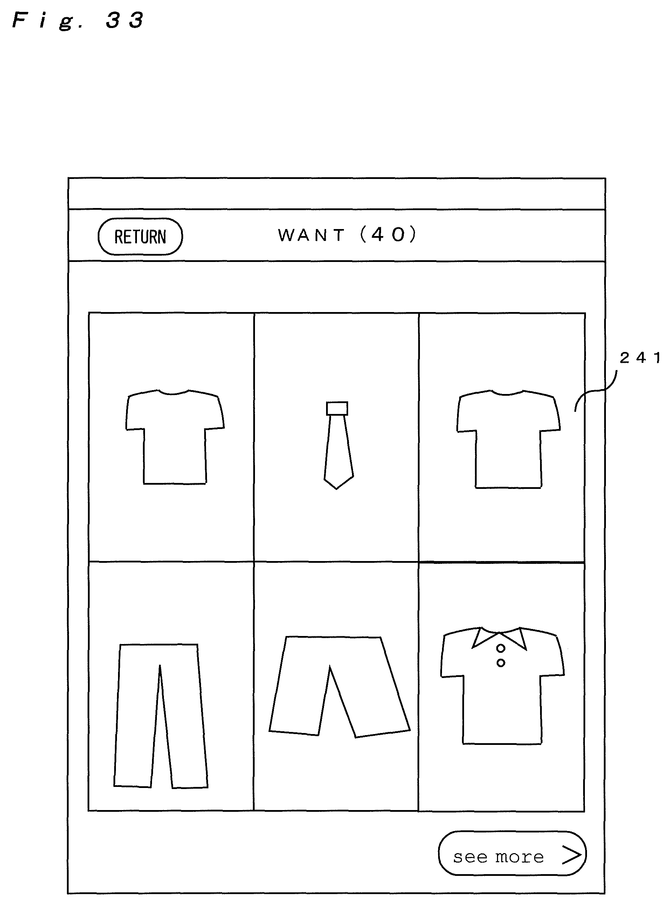

FIG. 33 is a diagram showing an example of plan-to-purchase commodity list displayed on the display unit 14.

The plan-to-purchase commodity list exhibits one or more thumbnail images 241 of commodities, as a list of commodities identified by commodity codes written onto the WANT space of the user DB 221.

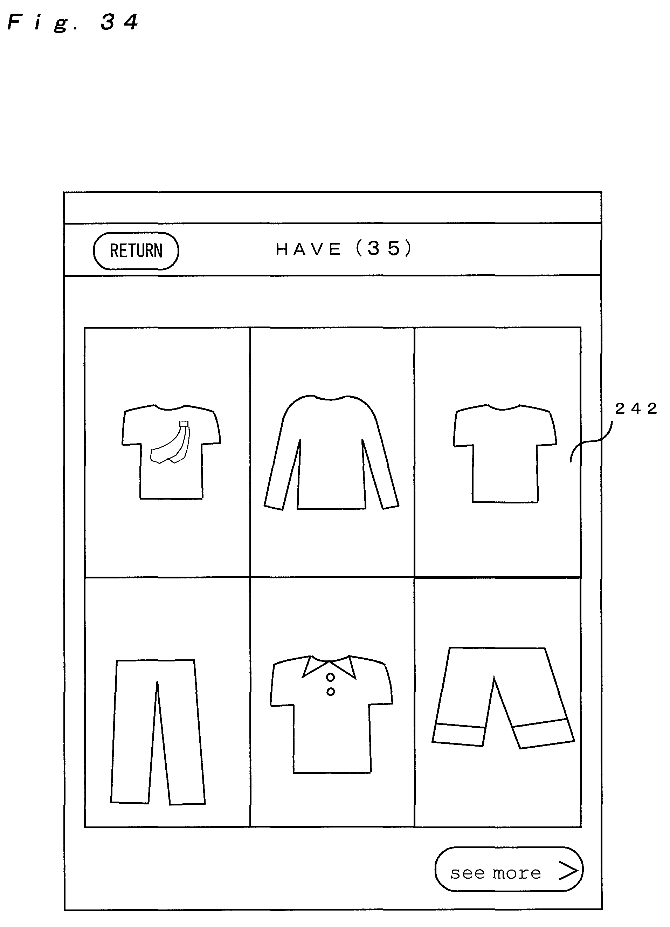

FIG. 34 is a diagram showing an example of the purchased commodity list.

The purchased commodity list exhibits one or more thumbnail images 242 of commodities, as a list of commodities identified by commodity codes written onto the HAVE space of the user DB 221.

In the examples of FIGs. 32 and 33, both lists exhibit one or more thumbnail images 241 and 242 of commodities, respectively. Each list, however, may exhibit commodities in a different form. For example, each list may display texts representing commodity names.

When the purchaser selects one of the one or more thumbnail images 241 and 242 of commodities from the lists displayed on the display unit 14, using the operation unit 15 (step S629/Yes), the purchaser terminal 10 transmits a request for acquiring commodity information of the commodities represented by the selected thumbnail images 241 and 242, together with the commodity codes for the commodities represented by the selected thumbnail images 231 and 232, to the management server 20 (step S630).

When receiving the request from the purchaser terminal 10 for acquiring commodity information and the commodity codes, the management server 20 extracts the commodity information corresponding to the commodity codes from the information storage unit 22 (step S631), creates commodity on-screen information based on the extracted commodity information (step S632), and transmits the created commodity on-screen information to the purchaser terminal 10 (step S633).

Upon receiving the commodity on-screen information from the management server 20, the purchaser terminal 10 displays the commodity on-screen information on the display unit 14 (step S643).

The displayed commodity on-screen information is similar to the commodity on-screen information shown in FIG. 21.

As a result of managing commodities the purchaser plans to purchase or has purchased by the user DB 221 in the above manner, the purchaser can easily check the commodities through a link from the my page.

### (7) Operation of Purchasing Commodity

### (7.1) Operation of Purchasing Commodity on EC site

As described above, the purchaser refers to commodity information and coordinates information to use the information as reference data that helps the purchaser in commodity purchase.

After that, on an EC site, the purchaser can purchase a commodity the purchaser decided to purchase.

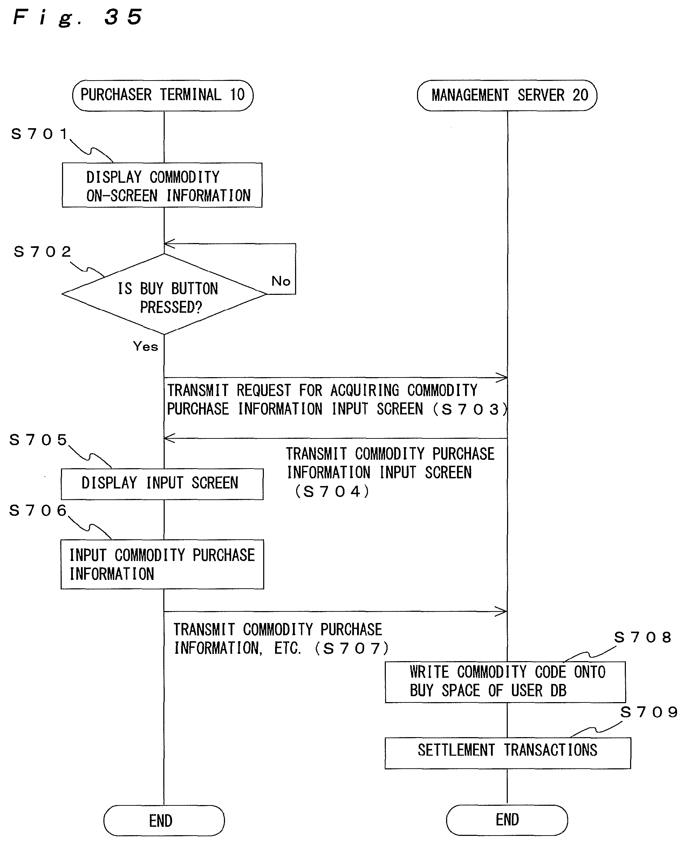

FIG. 35 is a sequence chart showing a flow of an operation that is carried out when the purchaser purchases a commodity on an EC site.

The operation will hereinafter be described, referring to FIG. 35.

The purchaser first displays the commodity on-screen information (FIG. 21) of a commodity the purchaser decided to purchase, using the operation unit 15 (step S701).

The commodity on-screen information is displayed by the methods described above. For example, it is displayed by reading a commodity code, using the purchaser terminal 10, at the store or selecting the thumbnail image 231 of the commodity from the coordinates information, coordinates detailed information, or plan-to-purchase commodity list (FIG. 33).

Another method of displaying the commodity on-screen information (FIG. 21) is a method of displaying the commodity on-screen information through a link from the commodity search screen in the following manner.

When the purchaser presses the search button 103 of the menu screen (FIG. 12), using the operation unit 15, the purchaser terminal 10 displays the commodity search screen on the display unit 14.

The displayed commodity search screen is similar to the commodity search screen shown in FIG. 16.

Using the purchaser terminal 10, as described above, the purchaser enters search conditions in the search condition spaces 141 of the commodity search screen (FIG. 16) to acquire one or more pieces of commodity information meeting the search conditions from the management server 20, selects one of the one or more pieces of commodity information, receives the commodity on-screen information (FIG. 21) from the management server 20, and displays the commodity on-screen information on the display unit 14.

After displaying the commodity on-screen information (FIG. 21) in the above manner, the purchaser presses the BUY button 154 on the commodity on-screen information, using the operation unit 15 (step S702/Yes). In response to this, the purchaser terminal 10 transmits a request for acquiring an input screen for inputting commodity purchase information (password, credit data, etc.) necessary for commodity purchase, to the management server 20 (step S703).

When receiving the request for acquiring the input screen, the management server 20 extracts information of the input screen from the information storage unit 22 and transmits the extracted information of the input screen to the purchaser terminal 10 (step S704).

When receiving the information of the input screen from the management server 20, the purchaser terminal 10 displays the information of the input screen on the display unit 14 (step S705).

Using the operation unit 15, the purchaser enters the commodity purchase information in an input space on the input screen (step S706). In response to this, the purchaser terminal 10 transmits the entered commodity purchase information, together with the commodity code for the commodity and the user ID for the purchaser, to the management server 20 (step S707).

When receiving the commodity purchase information, etc., from the purchaser terminal 10, the management server 20 writes the commodity code for the commodity to purchase onto the BUY space corresponding to the user ID in the user DB 221 (step S708).

The management server 20 then executes settlement transactions (step S709), thus completing the operation of purchasing the commodity.

The settlement transactions are similar to settlement transactions executed on an EC site, and include, for example, authenticating the purchaser based on a password, etc., and making a settlement by communicating with a credit firm's server.

Afterward, the purchased commodity is delivered to the purchaser.

In this manner, according to this embodiment, even if the purchaser has not purchased a commodity at a store, the purchaser can easily purchase a commodity sold at the store or a commodity listed on the plan-to-purchase commodity list any time on an EC site.

### (7.2) Operation of Letting Different User Purchase Commodity

The purchaser may sell a commodity the purchaser has purchased, to a different user (purchaser or information provider), using the coordinates information providing system according to this embodiment.

Hereinafter, a purchaser who sells a commodity in possession of the purchaser will be referred to as purchaser A, and the purchaser terminal 10 used by the purchaser A will be referred to as purchaser terminal 10A. A purchase who purchases a commodity from the purchaser A will be referred to as purchaser B, and the purchaser terminal 10 used by the purchaser B will be referred to as purchaser terminal 10B.

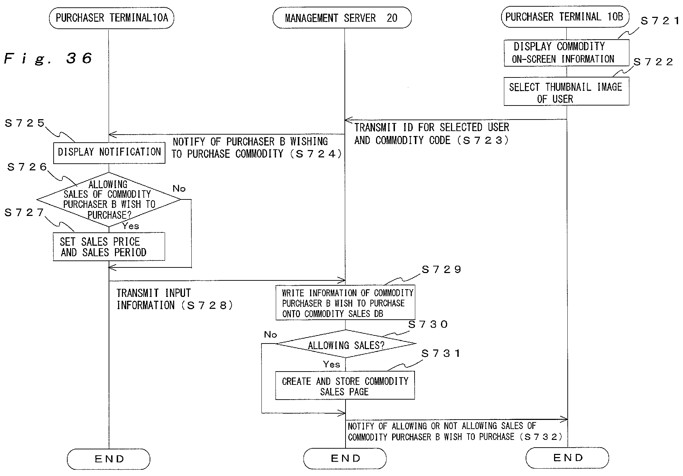

FIG. 36 is a sequence chart showing a flow of an operation that is carried out when the purchaser A registers a purchased commodity with the management server 20 for selling the commodity.

The operation will hereinafter be described, referring to FIG. 36.

The purchaser B first displays the commodity on-screen information (FIG. 21), using the purchaser terminal 10B (step S721).

The commodity on-screen information is displayed by the methods described above. For example, it is displayed by reading a commodity code, using the purchaser terminal 10, at the store, or selecting a thumbnail image, etc., from the coordinates information or coordinates detailed information, or pressing the search button 103 of the menu screen (FIG. 12) to switch to the commodity search screen (FIG. 16) and performing commodity search thereon.

Subsequently, using the operation unit 15 of the purchaser terminal 10B, the purchaser B selects a thumbnail image of a user who wishes to sell a commodity out of the thumbnail images 159 of different users (purchasers) who already possesses the commodity that are displayed on the screen of the commodity o-screen information (step S722).

In response to this, the purchaser terminal 10B transmits the user ID for the selected user and the commodity code for the displayed commodity, to the management server 20 (step S723).

It is assumed in this case that the purchaser B selects a thumbnail image of the purchaser A.

When receiving the user ID and commodity code from the purchaser terminal 10B, the management server 20 notifies the purchaser terminal 10A of the purchaser A identified by the user ID that the purchaser B wishes to purchase the commodity identified by the commodity code (step S724).

How to make such a notification is not limited to a specific method. The management server 20 may cause the purchaser terminal 10A to display the notification on the my page of the purchaser A or send the notification by e-mail.

When receiving the notification, the purchaser terminal 10A displays the notification on the display unit 14 (step S725).

The purchaser A checks the contents of the notification displayed on the display unit 14 and determines whether or not to sell the commodity the purchase of which by the purchaser B is notified of. The purchaser A then inputs information indicating "allowing the sales of the commodity or not allowing the sales of the commodity" in response to the notification, using the operation unit 15 (step S726).

In the case of "allowing the sales" (step S726/Yes), the purchaser A also inputs information of a sales price and a sales period for the sales of the commodity, using the operation unit 15 (step S721).

Subsequently, the purchaser terminal 10A transmits the input information (including the sales price and sales period), the user ID for the purchaser A, and the commodity code for the commodity, to the management server 20 (step S728).

When receiving those pieces of information from the purchaser terminal 10A, the management server 20 registers the received information with the commodity sales DB 224 (step S729).

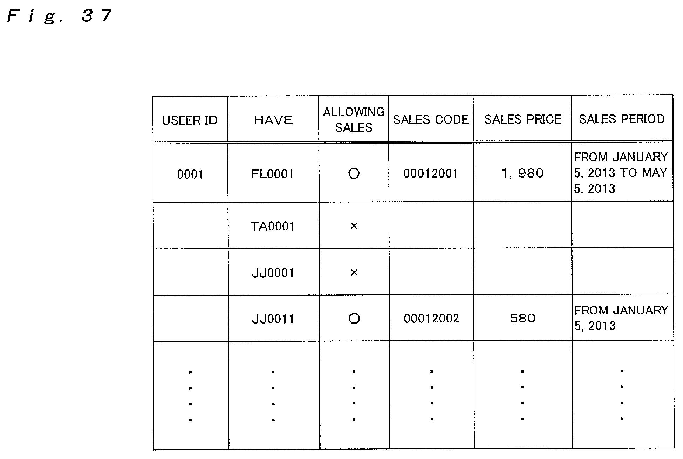

FIG. 37 is a diagram showing an example of a configuration of data managed by the commodity sales DB 224.

As shown in FIG. 37, in the commodity sales DB 224, data equivalent to the purchased commodity list is stored for each user, in which list a commodity code for a purchased commodity is included.

For each commodity code, whether the sales of the commodity identified by the commodity code is allowed or not (O or x) is written. To a commodity the sales of which is allowed (which will hereinafter be referred to as "sales commodity"), a sales code for identifying the commodity is given, and information of a sales price and a sales period is correlated with the sales code.

When receiving information indicating "allowing the sales" from the purchaser terminal 10A (step S730/Yes), the management server 20 creates a commodity sales page for a sales commodity, based on information registered with the commodity sales DB 224 and commodity information registered with the commodity DB 222, and stores the created commodity sales page in the information storage unit 22 (step S731).

The management server 20 then transmits a notice that the status of the commodity the purchaser B wishes to purchase is set to "allowing the sales", to the purchaser terminal 10B (step S732).

When receiving information indicating "not allowing the sales" from the purchaser terminal 10A (step S730/No), the management server 20 transmits a notice that the status of the commodity the purchaser B wishes to purchase is set to "not allowing the sales", to the purchaser terminal 10B (step S732).

As described above, according to this embodiment, the purchaser A allows the sale of a commodity in possession of the purchaser A in response to a request from the purchaser B. The purchaser A can also allow the sales of a commodity in possession of the purchaser A in a voluntary manner. For example, using the purchaser terminal 10A, the purchaser A displays the purchased commodity list (FIG. 34) on the display unit 14 by the above method, selects a commodity the purchaser A wishes to sell out of one or more commodities listed in the purchased commodity list, and sets the "allowing the sale" status, sales price, and sales period for the commodity.

In the above manner, sales commodities of the purchaser A are registered with the commodity sales DB 224 and can be purchased through a link from the commodity sales page.

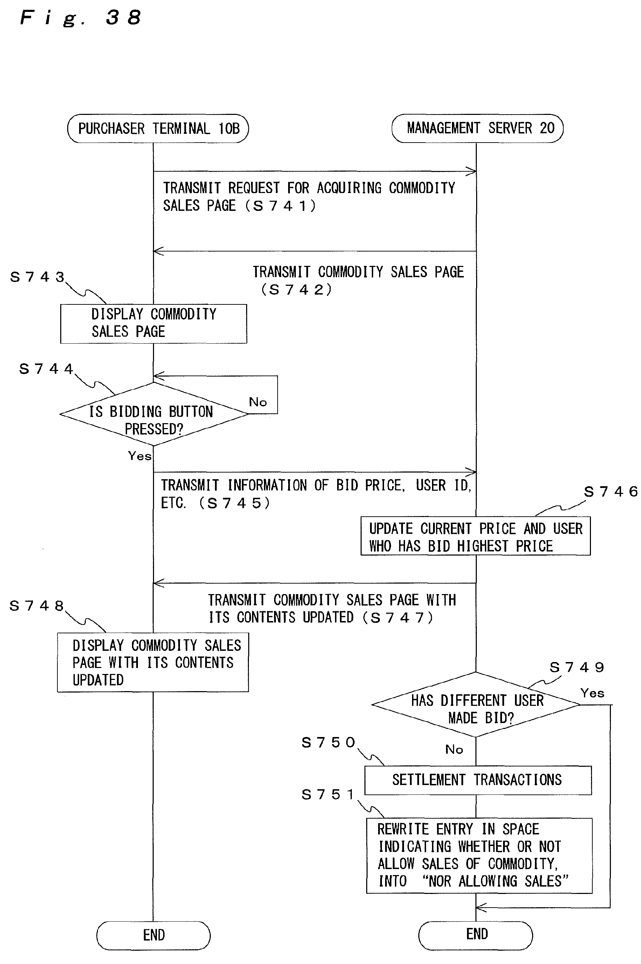

FIG. 38 is a sequence chart showing a flow of an operation that is carried out when the purchaser B purchases a sales commodity of the purchaser A registered with the commodity sales DB 224.

The operation will hereinafter be descried, referring to FIG. 38.

The purchaser B first accesses an EC site for commodity sales managed by the management server 20, using the purchaser terminal 10B.

Using the purchaser terminal 10B, the purchaser B then inputs search conditions, etc., as does on an ordinary EC site to identify a sales commodity the purchaser B wishes to purchase, and transmits a request for acquiring a commodity sales page for the sales commodity, together with a sales code, to the management server 20 (step S741).

When receiving the request for acquiring the commodity sales page, etc., from the purchaser terminal 10B, the management server 20 extracts the page corresponding to the received sales code from the information storage unit 22 and transmits the extracted page to the purchaser terminal 10 (step S742).

When receiving the commodity sales page from the management server 20, the purchaser terminal 10B displays the commodity sales page on the display unit 14 (step S743).

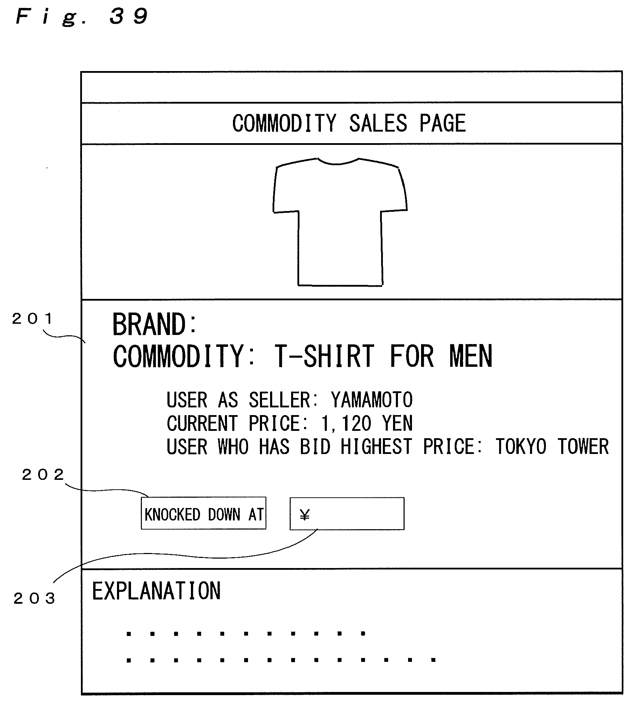

FIG. 39 is a diagram showing an example of the commodity sales page.

FIG. 39 depicts an example in which a commodity is sold at auction. The commodity sales page of FIG. 39 displays information 201 indicating the commodity contents (brand, commodity name, account of a user who sells the commodity, current price, account of a user who has bid the highest price), a bidding button 202, and bid price entry space 203.

Using the operation unit 15, the purchaser B enters a price higher than the current price in the entry space 203 and presses the bidding button 202 (step S744/Yes). In response to this, the purchaser terminal 10B transmits information indicative of the bid price, a sales code, and the user ID for the purchaser B, to the management server 20 (step S745).

When receiving those pieces of information from the purchaser terminal 10B, the management server 20 updates "current price" and "user who has bid the highest price" on the commodity sales page corresponding to the sales code (step S746), and transmits the commodity sales page with its contents updated, to the purchaser terminal 10B (step S747).

When receiving the commodity sales page with its contents updated, the purchaser terminal 10B displays the commodity sales page on the display unit 14 (step S748).

If no bid is made by any different user in a sales period (step S749/No), the purchaser B becomes a successful bidder, in which case the management server 20 executes settlement transactions (step S750).

The management server 20 then rewrites an entry in the space indicating whether or not allow the sales in the commodity sales DB 224, the space being correlated with the sales code for the sales commodity knocked down to the purchaser B at this auction, into "x (not allowing the sales)" (step S751).

The operation of purchasing the sales commodity is thus completed.

In this manner, the purchaser A registers a commodity purchased in the past with the purchased commodity list by pressing the HAVE button 156 and then registers the commodity with the commodity sales DB 224, as a sales commodity. This allows the purchaser A to sell the commodity easily to a different user.

According to the embodiment described above, the commodity is sold by the auction method according to which an entered purchase price is updated to a higher price. The commodity, however, may be sold by a different sales method.

For example, such a bid sales method may be adopted that the commodity is sold to a user who has entered a bid of the highest prices among bid prices entered in a given period.

When a sales commodity is registered with the commodity sales DB 224, the management server 20 may display information of the sales commodity on the screen of the commodity on-screen information corresponding to the commodity code for the sales commodity.

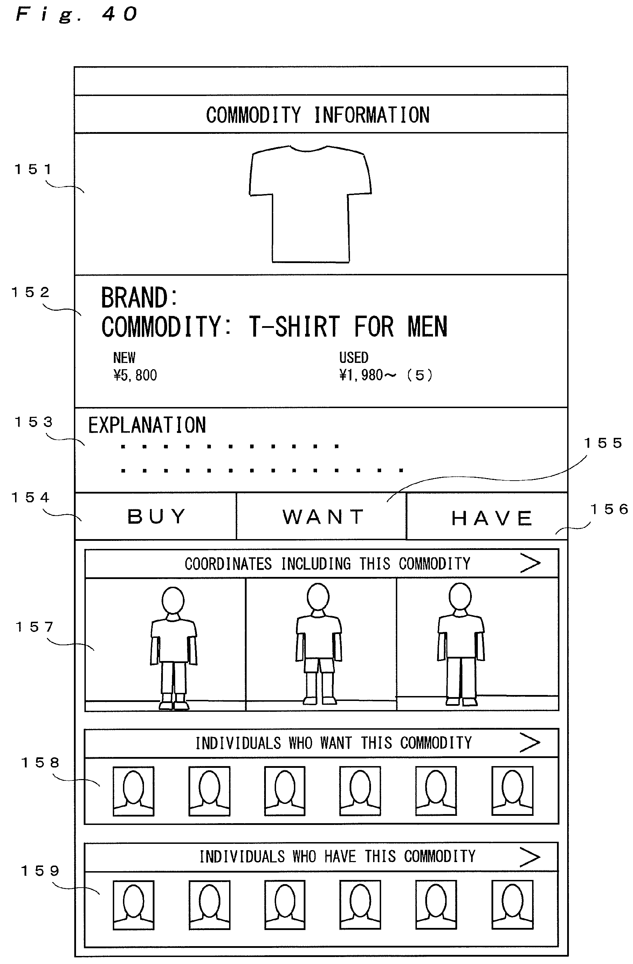

FIG. 40 is a diagram showing an example of commodity sales information representing information of the sales commodity.

In the example of FIG. 40, when the commodity indicated by the commodity sales information is available as new one as well as used one, the lowest price for the commodity is displayed as "used clothes ¥1,980" and the number of the commodities sold as used clothes is indicated as "5".

When wishing to purchase the sales commodity, the purchaser B selects one of those new and used sales commodities and presses the BUY button 154 to purchase the selected sales commodity.

According to the embodiment described above, the purchaser A sets the status of a commodity in possession of the purchaser A to "allowing the sales", in response to a request from the purchaser B. The purchaser A, however, may set the status of the commodity voluntarily to "allowing the sales".

In such a case, for example, the purchaser A displays the purchased commodity list, using the purchaser terminal 10A, selects a commodity whose status is set to "allowing the sales" on the list, and causes the purchaser terminal 10A to transmit the commodity code for the selected commodity to the management server 20. Upon receiving the commodity code, the management server 20 writes information indicated by the commodity code onto the commodity sales DB 224 or updates information stored in the commodity sales DB 224.

### (8) Operation of Viewing Ranking

As described above, the user makes an evaluation "Like", "Comment", or "Favorite" on a coordinates example proposed by an information provider.

The management server 20 counts the number of the above evaluations made on each coordinates example (coordinates information), creates a ranking in which the greater the number of evaluations made on a coordinates example is, the higher the coordinates example is ranked, and provides ranking information in response to a ranking acquisition request from the terminal 10 or 30 of the user (purchaser or information provider).

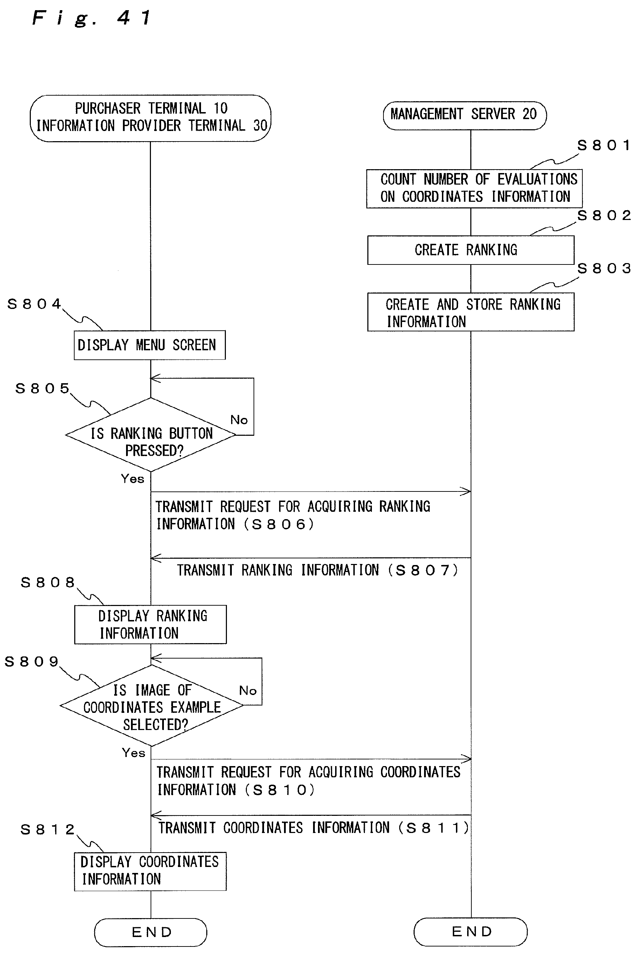

FIG. 41 is a sequence chart showing a flow of an operation of providing the ranking information.

The operation will hereinafter be described, referring to FIG. 41.

The management server 20, for example, regularly refers to the coordinates DB 223 and counts the number of evaluations made on each coordinates information (coordinates example) (step S801).

The management server 20 then creates a ranking of coordinates information (coordinates examples) based on the counted number of evaluations (step S802).

How to create this ranking is not limited to a specific method.

For example, the ranking may be created such that the numbers of three types of evaluations "Like", "Comment" and "Favorite" are simply totaled and that coordinates information on which a greater number of evaluations are made ranked higher, or such that each evaluation is weighted.

When the management server 20 records a coordinates example evaluation period as a history in the information storage unit 22, the management server 20 may create the ranking based on the total number of evaluations counted in a given period (e.g., the last three months).

The management server 20 adds a coordinates ID for coordinates information ranked higher, coordinates example images, etc., to the created ranking to create ranking information, and stores the ranking information in the information storage unit 22 (step S803).

After the ranking information is created, the user (purchaser or information provider) displays the menu screen (FIG. 12), using the user's terminal 10 or 30 (step S804), and presses the ranking button 108 on the menu screen (step S805/Yes). The terminal 10 or 30 transmits a request for acquiring the ranking information to the management server 20 (step S806).

In response to the request for acquiring the ranking information, the management server 20 extracts the ranking information from the information storage unit 22 and transmits the ranking information to the terminal 10 or 30 (step S807).

Upon receiving the ranking information from the management server 20, the terminal 10 or 30 displays the ranking information on the display unit 14 or 34 (step S808).

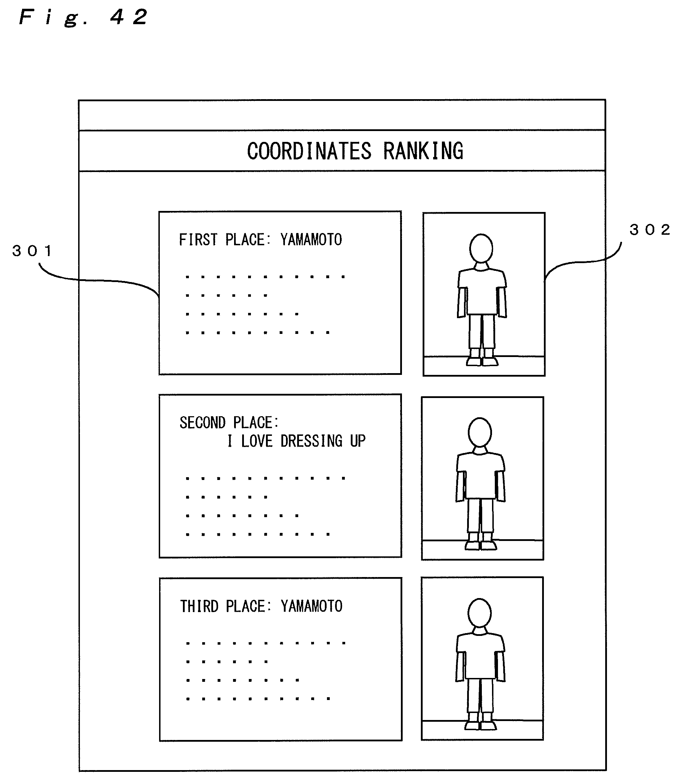

FIG. 42 is a diagram showing an example of the ranking information displayed on a user's terminal 10 or 30.

In the example of FIG. 42, user accounts/ explanations 301 of users having provided coordinates examples ranked high (first place to third place) and images 302 of the coordinates examples are displayed as the ranking information.

When the user presses, for example, the image 302 of each coordinates example ranked each place, using the operation unit 15 or 35 of the terminal 10 or 30 (step S809/Yes), the terminal 10 or 30 transmits a request for acquiring coordinates information of the ranked coordinates example of which the image 302 is pressed, together with the coordinates ID for the coordinates example, to the management server 20 (step S810).

When receiving the request for acquiring coordinates information, etc., from the user's terminal 10 or 30, the management server 20 extracts the coordinates information from the coordinates DB 223, based on the received coordinates ID, and transmits the extracted coordinates information to the user's terminal 10 or 30 (step S811).

When receiving the coordinates information from the management server 20, the user's terminal 10 or 30 displays the coordinates information on the display unit 13 or 34 (step S812).

By referring to each displayed coordinates example ranked each place, e.g., to a coordinates example supported by many users and therefore ranked high place, the user can use such coordinates example as data that helps the user in commodity purchase.

According to the above embodiment, the management server 20 creates the ranking by ranking each piece of coordinates information. However, the management server 20 may count the number of the above evaluations made in a given period for each user (information provider) to create and provide the ranking information.

### [Conclusion from First Invention]

As described above, according to the coordinates information providing system of the first embodiment of the present invention, the management server 20 stores therein information (commodity information) of a commodity sold at a store and information (coordinates information) of a coordinates example, as pieces of information correlated with each other. The purchaser of the commodity reads code information, using the purchaser terminal 10, at the store, etc., and transmits the code information to the management server 20. The purchaser is thus able to easily acquire and view not only the commodity information correlated with the commodity code indicated by the code information but also information of one or more coordinates examples using the commodity. As a result, the purchaser can use the viewed information as reference data that helps the purchaser in commodity purchase and coordinates.

According to the first embodiment of the present invention, the information provider can easily register a coordinates example proposed by the information provider with the management server 20, using the information provider terminal 30, and provide the purchaser with the coordinates example.

For example, when the information provider is an employee of a manufacturer or sales agent manufacturing or selling a commodity or a clerk of a store selling the commodity, the manufacturer, sales agent, or store can aggressively inform the purchaser of a coordinates example of the commodity they promote in the hope of achieving a great advertizing effect.

At the release of a new product, an employee or clerk of the manufacturer, sales agent, or store uploads a coordinates example using the new product onto the management server 20 and puts the new product open to the public, that is, transmits product information to the public, thereby effectively simulates the purchaser's appetite for purchasing.

According to the first embodiment of the present invention, the management server 20 stores therein pieces of coordinates information provided by the same information provider, as pieces of coordinates information correlated with each other. When the purchaser likes a coordinates example indicated by a piece of coordinates information acquired by using the purchaser terminal 10, therefore, the purchaser can easily acquire and view a different coordinates example provided by the same information provider.

Using the purchaser terminal 10, the purchaser is also able to easily acquire and view commodity information correlated with a different piece of coordinates information.

According to the first embodiment of the present invention, the management server 20 manages a history of various evaluations on a received coordinates example from the user's terminal 10 or 30, and transmits coordinates detailed information indicating the number of the various evaluations to the user's terminal 10 or 30 in response to a request therefrom. The purchaser, therefore, is able to understand at a glance the evaluations on the coordinates example and to use the evaluations as references data that helps the purchaser in commodity purchase and coordinates.

According to the first embodiment of the present invention, the management server 20 creates ranking information on a coordinates example or an information provider, based on the number of various evaluations, etc. The user, therefore, can easily confirm at a glance a coordinates example or information provider that currently enjoys a great deal of supports.

According to the first embodiment of the present invention, the management server 20 manages a commodity the purchaser plans to purchase, by putting the commodity on the plan-to-purchase commodity list and transmits the list to the purchaser terminal 10 in response to a request from the purchaser. The purchaser, therefore, is able to use the list effectively as a memo such that the purchaser purchases the commodity later or checks a coordinates example including the commodity by checking the list.

According to the first embodiment of the present invention, the management server 20 manages a commodity the purchaser has purchased, by putting the commodity on the purchased commodity list, and transmits the list to the purchaser terminal 10 in response to a request from the purchaser. The purchaser, therefore, can easily check a coordinates example including the commodity.

According to the first embodiment of the present invention, the management server 20 creates the commodity on-screen information indicating a user in possession of a commodity and a user who plans to purchase the commodity and transmits the commodity on-screen information to the purchaser terminal 10. The purchaser, therefore, is able to easily know which user is interested in the commodity and to make a request for purchasing the commodity to the user in possession of the commodity.

According to the first embodiment of the present invention, the management server 20 browses around the Web pages of brand companies, such as manufactures or sales agents that manufacture or sell commodities, and automatically extracts commodity information to register the commodity information with the commodity DB 222. This saves an information management administrator and the sales agents from trouble of inputting commodity information.

### <Second Embodiment>

### (Summary of Second Embodiment)

According to a coordinates information providing system of a second embodiment of the present invention, when a purchaser reads code information attached to a commodity at a store, information indicating at which store the code information is read is registered with a database. As a result, when the commodity is purchased by the purchaser on an EC site, which store has contributed to the commodity sales on the EC site to what extent can be easily understood.

In the following description, unless specified otherwise, configurations, operations, effects, etc., of the second embodiment are the same as those of the first embodiment of the present invention.

### (Configuration of Second Embodiment)

### (1) Overall Configuration of Coordinates Information Providing System

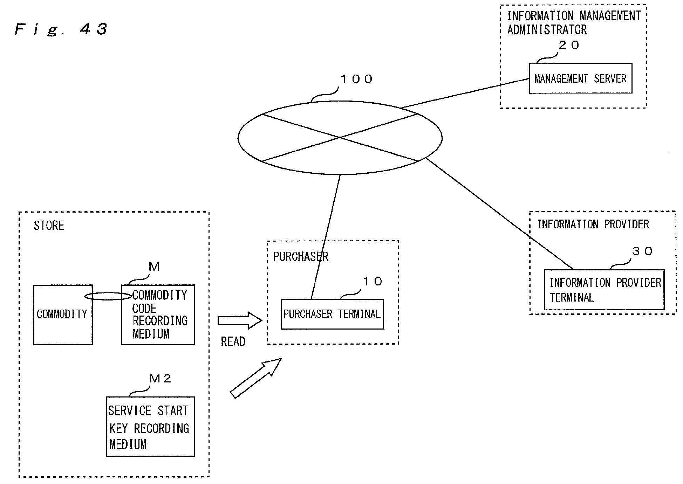

FIG. 43 is a diagram showing a configuration of the coordinates information providing system according to the second embodiment of the present invention.

According to the second embodiment, a service start key recoding medium M2 recording thereon a service start key is added to the coordinates information providing system of the first embodiment.

According to this embodiment, the service start key is a piece of code information that is read first by the purchaser using the purchaser terminal 10 when the purchaser starts reading code information attached to a commodity, representing information peculiar to each store selling commodities.

As described above, the service start key recoding medium M2 records thereon the service start key, and is provided as an article (panel, poster, pedestal, etc.) placed in the store or a tag or article attached to a commodity sold at the store.

In this case, by printing, etc., a bar code, two-dimensional bar code, characters, or figures is recorded on such an article, as the service start key.

The information reading unit 16 of the purchaser terminal 10 reads such a service start key, using an optical scanner function.

The service start key recoding medium M2 may be an information recoding medium, such as electronic tag capable of short-distance radio communication. In such a case, the service start key is written in on the electronic tag, and the information reading unit 16 reads the service start key from the service start key recoding medium M2, using a short-distance radio communication function.

It is preferable that the service start key be changed at every given period in order to prevent unauthorized access.

### (2) Configuration of Management Server

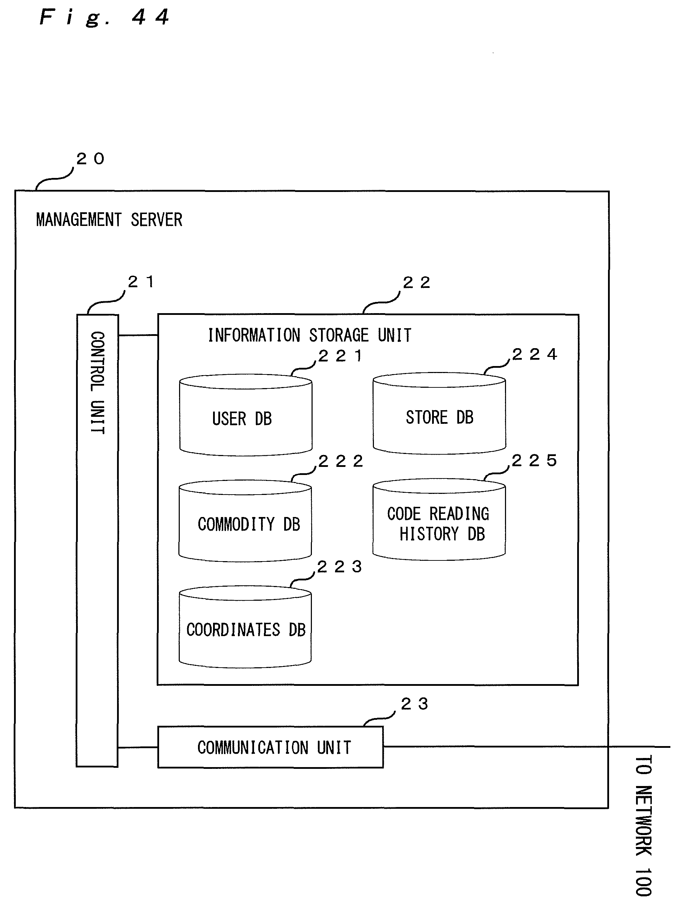

FIG. 44 is a diagram showing a configuration of the management server 20 according to the second embodiment of the present invention.

As shown in FIG. 44, different from the information storage unit 22 of the first embodiment, the information storage unit 22 of the management server 20 of the second embodiment further includes a store database (DB) 225 that manages information of stores selling commodities, and a code reading history DB 226 that manages histories of reading of commodity code information by the purchasers at stores.

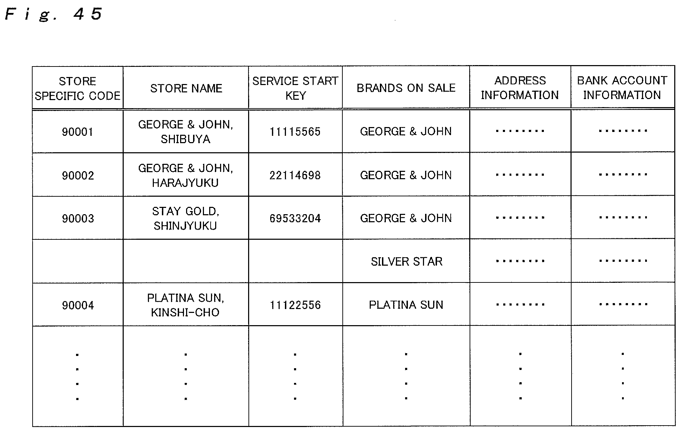

FIG. 45 is a diagram showing an example of a configuration of data managed by the store DB 225 according to the second embodiment of the present invention.

As shown in FIG. 45, the store DB 225 stores therein store names, service start keys, i.e., pieces of code information correlated one by one with store specific codes, brands of commodities sold at stores (brands on sale), and address information of the stores (addresses, latitudes/longitudes, etc.) such that the store names, service start keys, brands, and address information are correlated with the store specific codes serving as identification information peculiar to stores.

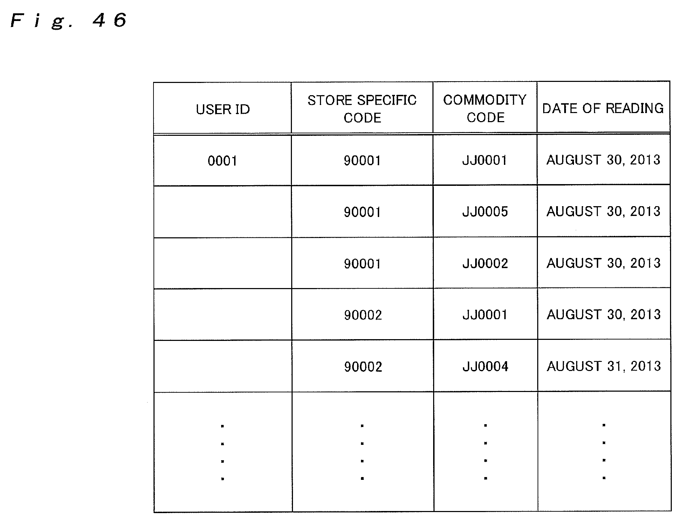

FIG. 46 is a diagram showing an example of a configuration of data managed by the code reading history DB 226 according to the second embodiment of the present invention.

As shown in FIG. 46, the code reading history DB 226 stores therein the above store specific codes peculiar to stores, commodity codes read at the stores, and dates of reading the commodity codes, such that the store specific codes, commodity codes, and the dates of reading are correlated with user IDs for purchasers.

### (Operations According to Second Embodiment)

### (1) Operation of Registering Code Information Reading History

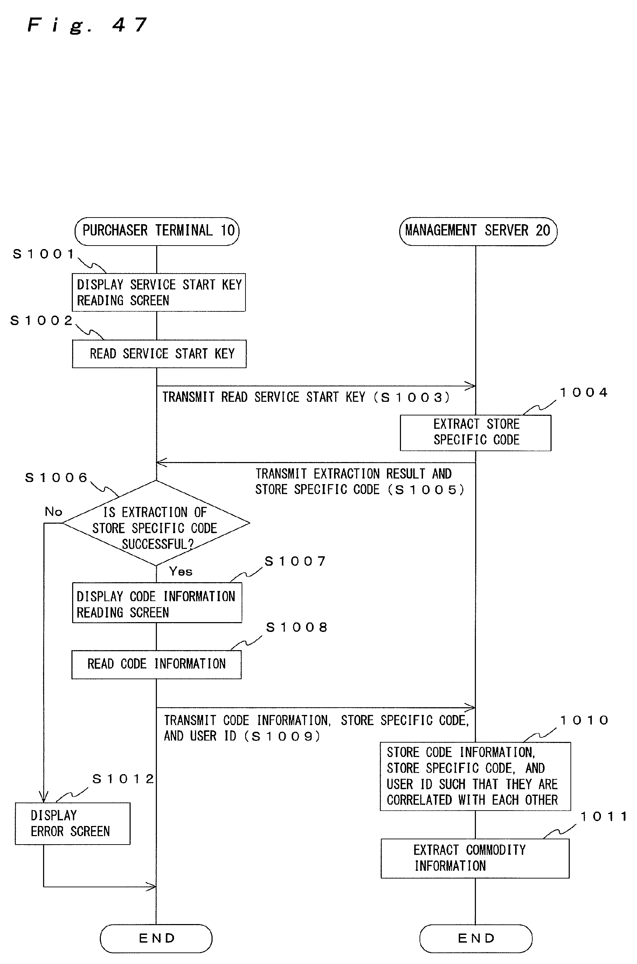

FIG. 47 is a sequence chart showing a flow of an operation of registering a code information reading history, according to the second embodiment of the present invention.

An operation carried out by a purchaser during a process of visiting a store displaying commodities for sale, reading code information attached to a commodity, using the purchaser terminal 10, in the same manner as in the first embodiment, and registering the read code information with the management server 20 will hereinafter be described, referring to FIG. 47.

FIG. 47 corresponds to FIGs. 18 and 19 used for describing the first embodiment.

The purchaser first visits a store displaying commodities for sale, and selects a given button (not depicted) on the menu screen. As a result, the display unit 14 displays a service start key reading screen (step S1001).

Using the information reading unit 16 of the purchaser terminal 10, the purchaser then reads the service start key (bar code, two-dimensional bar code, text) for the store that is recorded on the service start key recoding medium M2 placed in the store the purchaser is visiting (step S1002).

The purchaser terminal 10 transmits the read service start key to the management server 20 (step S1003).

When receiving the service start key from the purchaser terminal 10, the management server 20 refers to the store DB 225 and extracts the store specific code correlated with the received service start key (step S1004).

At this time, the management server 20 generates extraction result information indicating a success or failure in the store code extraction.

The extraction result information indicates a success when the store specific code correlated with the service start key is extracted in the above manner, while indicates a failure when the service start key is not registered with the store DB 225 and therefore the management server has failed to extract the store specific code.

The management server 20 then transmits the extracted store specific code (no store specific code in the case of failure) and the extraction result information, to the purchaser terminal 10 (step S1005).

When receiving the extraction result information, etc., from the management server 20, the purchaser terminal 10 determines whether the extraction result information indicates a success or failure (step S1006).

When the extraction result information indicates a failure and consequently the purchaser terminal 10 fails to receive the store specific code (step S1006/No), the display unit 16 displays an error screen (step S1012), at which the operation comes to an end.

When the extraction result information indicates a success and therefore the purchaser terminal 10 succeeds in receiving the store specific code (step S1006/Yes), the display unit 14 displays the code information reading screen shown in FIG. 20 (step S1007).

Using the information reading unit 16 of the purchaser terminal 10, the purchaser reads code information (bar code, two-dimensional bar code, text) recorded on the commodity code recording medium M corresponding to a commodity the purchase plans to purchase (step S1008).

The purchaser terminal 10 converts the read code information into a commodity code and transmits the commodity code, together with the received store specific code and the user ID for the purchaser, to the management server 20 (step S1009).

When receiving the commodity code, store specific code, and user ID for the purchaser that are sent from the purchaser terminal 10, the management server 20 registers the commodity code and store specific code as the codes correlated with the user ID in the code reading history DB 226 (step S1010).

At this time, the management server 20 registers the current date with the code reading history DB 226, as the date of reading.

The management server 20 may refer to the store DB 225 and commodity DB 222 to determine whether commodities bearing the brand of the commodity identified by the received commodity code are on sale at the store identified by the received store specific code and may register the commodity code and store specific code as the codes correlated with the user ID in the reading history DB 226 only when determining that such brand commodities are on sale at the store.

The management server 20 then refers to the commodity DB 222 of the information storage unit 22 and extracts commodity information of the commodity identified by the received commodity code (step S1011). Steps to follow step S1011 are the same as steps S304 to S323 FIGs. 18 and 19) of the first embodiment and therefore will be omitted in further description.

In this manner, according to this embodiment, when the purchaser registers a commodity code for a commodity the purchaser plans to purchase with the management server 20, using the purchaser terminal 10, the purchaser also registers a store specific code indicating at which store the commodity code is read, as the store specific code correlated with the commodity code.

By referring to the code reading history DB 226, the management server 20 can easily create data indicating that what kinds of stores the purchaser has visited in what order. This is very helpful to marketing activities, etc.

### (2) Operation of Purchasing on EC Site

An operation carried out by the purchaser in a process of putting a commodity, whose code information is read at a store, on the WANT list and then purchasing the commodity on an EC site will then be described.

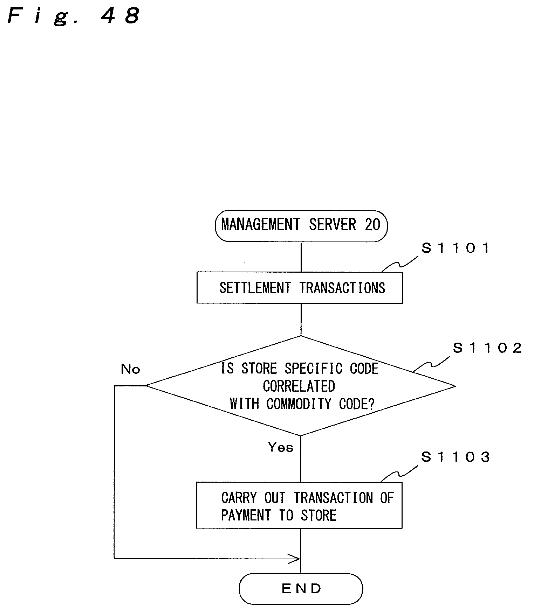

FIG. 48 is a flow chart showing a flow of an operation that is carried out when the purchaser purchases a commodity on an EC site, according to the second embodiment of the present invention.

The operation will hereinafter be described, referring to FIG. 48, which corresponds to FIG. 35 used for description of the first embodiment.

Steps to take before step of settlement transactions are the same as steps S701 to S708 (FIG. 35) in the first embodiment and therefore will be omitted in further description.

When the purchaser purchases a commodity on an EC site, the management server 20 settles the payment for the commodity by credit card payment or bank account payment, carrying out a transaction of transferring the money equivalent to the price of the purchased commodity from the purchaser's bank account to the EC site's bank account (step S1101).

The management server 20 then refers to the code reading history DB 226 and determines whether a store specific code is correlated with the commodity code for the purchased commodity (step S1102).

When determining that the store specific code is not correlated with the commodity code (step S1102/No), the management server 20 ends the operation at this point.

When determining that the store specific code is correlated with the commodity code in the code reading history DB 226 (step S1102/Yes), the management server 20 extracts the store specific code and refers to the store DB 225 to extract bank account information on the store identified by the store specific code, and then carries out credit settlement transactions or bank account settlement transactions by transmitting information necessary for the settlement (amount of money, bank account, title, etc.) to a credit firm's server or financial institution's server so that part of the payment for the purchased commodity is transferred from the EC site's bank account to the store's bank account (step S1103), at which point the operation comes to an end.

In this manner, according to this embodiment, in a case where the purchaser having purchased a commodity read code information of the purchased commodity in the past at the store, the management server 20 carries out settlement transactions such that part of the payment for the purchased commodity is transferred from the EC site's bank account from the Store's bank account.

### (Conclusions from Second Embodiment)

As described above, according to the coordinates information providing system of the second embodiment of the present invention, when the purchaser reads the information code of a commodity, using the purchaser terminal 10, at which store the information code is read is recorded in the code reading history DB 226. When the purchaser purchases the commodity on an EC site, therefore, the purchaser can easily know at which store the commodity was checked in the past and therefore can easily understand which store has contributed to sales on the EC site to what extent.

A store at which commodity code information having lead to a purchase of a commodity is read is rewarded with part of the payment for the purchased commodity. This allows the store to make profits efficiently without securing a large amount of human resources for customer service.

This advantage to stores leads to an expectation of an increase in the number of stores that take part in services using the coordinates information providing system.

When the management server 20 receives a commodity code and a store specific code from the purchaser terminal 10, the management server 20 checks whether the commodity identified by the commodity code is sold at the store identified by the store specific code. This allows accurately understanding to what extent the store has contributed to commodity sales on the EC site.

According to this embodiment, the service start key serving as information peculiar to a store is recorded on the service start key recording medium. However, a store specific code may be recorded directly on the recording medium so that the purchaser terminal 10 transmits the read store specific code directly to the management sever 20.

### <Conclusion from Embodiments>

As described above, according to the coordinates information providing system according to the embodiments of the present invention, the management server 20 stores therein information (commodity information) of a commodity sold at a store and information (coordinates information) of a coordinates example, as pieces of information correlated with each other. The purchaser of the commodity reads code information, using the purchaser terminal 10, at the store, etc., and transmits the code information to the management server 20. The purchaser is thus able to easily acquire and view not only the commodity information correlated with the commodity code indicated by the code information but also information of one or more coordinates examples using the commodity. As a result, the purchaser can use the viewed information as reference data that helps the purchaser in commodity purchase and coordinates.

According to the coordinates information providing system of the embodiments of the present invention, when the purchaser reads the information code of a commodity, using the purchaser terminal 10, at which store the information code is read is recorded in the code reading history DB 226. When the purchaser purchases the commodity on an EC site, therefore, the purchaser can easily know at which store the commodity was checked in the past and therefore can easily understand which store has contributed to sales on the EC site to what extent.

The above purchaser terminal 10, the management server 20, and the information provider terminal 30 or information management administrator terminal 40 are realized by programs loaded onto the CPU and a memory. These terminals, i.e., devices or servers may also be configured as combinations of arbitrary hardware and software other than the above programs. A high degree of freedom in designing these terminals can be understood easily by those who skilled in art.

When the above purchaser terminal 10, the management server 20, and the information provider terminal 30 or information management administrator terminal 40 are configured as a group of software modules, i.e., a group of programs, those programs are recorded on an optical recording medium, magnetic recording medium, optical magnetic recording medium, or such a recoding medium as semiconductor and are loaded from the recoding medium or may be loaded from an external device connected to the system via a given network.

The above embodiments are examples of preferred embodiments of the present invention. Embodiments of the present invention are therefore not limited to the above embodiments, and may be modified into various forms of applications on the condition that the modification does not deviate from the substance of the present invention.

For example, in the embodiments described above, commodities are assumed to be clothes and accessories. However, the commodities may be provided as articles other than clothes and accessories in every case where combinations of the commodities offer useful information.

### [Explanation of Letters and Numerals]

10 Purchaser terminal
11, 21, 31, 41 Control unit
12, 22, 32, 42 Information storage unit
13, 23, 33, 43 Communication unit
14, 34, 44 Display unit
15, 35, 45 Operation unit
16, 36 Information reading unit
20 Management server
30 Information provider terminal
37 Photographing unit
40 Information management administrator terminal
100 Network
101 User name
102 My page button
103 Search button
104 Bar code scanning button
105 Camera button
106 Coordinates information management button
107 Coordinates information favorite button
108 Ranking button
121 Coordinates information newly registering button
122 Coordinates information state buttons
123 Thumbnail image
131 Image entry space
132 Upload button
133 Coordinates image
134 Commodity information input button
135 Editing detailed information
136 State information
137 Selected commodity information
141 Search condition space
142 Search result
143 Commodity information selection space
151 Image of a commodities
152 Text information
153 Commodity details information
154 BUY button
155 WANT button
156 HAVE button
157 Thumbnail images of coordinates examples
158 Thumbnail images of other users who are examining the commodity for a prospective purchase
159 Thumbnail images of other users who already possess the commodity
171 Image of an coordinates example
172 User icon
173 Detailed information button
174 Like counter
175 Comment counter
176 Favorite counter
177 Like button
178 Comment button
179 Favorite button
180 Thumbnail images of commodities
181 Thumbnail images of different coordinates examples
191 Image of a coordinates example
192 Text information of the coordinates example
193 Commodity information
194 Commodity details display button
195 Comment input button
201 User icon
202 Profile
203 Number-of-users-to-follow
204 Number-of-followers
205 Follow button
208 Coordinates list counter
209 Coordinate list button
210 WANT counter
211 WANT list button
212 HAVE counter
213 HAVE list button
214 Favorite counter
215 Favorite button
221 User DB
222 Commodity DB
223 Coordinates DB
224 Commodity sales DB
225 Store DB
226 Code reading history DB
231 Thumbnail images of coordinates examples
241, 242 Thumbnail images of commodities
301 User accounts/explanations
302 Images of the coordinates examples
M Commodity code recording medium
M2 Store specific code recoding medium

## Claims

1. A coordinates information providing system comprising:
a purchaser terminal that reads a commodity code from a commodity code recording medium recoding thereon the commodity code identifying a commodity; and
a management server connected to the purchaser terminal via a network, the management server managing coordinates information indicative of a coordinates example and information of a commodity used in the coordinates example such that both pieces of information are correlated with each other, wherein
when the management server receives the read commodity code from the purchaser terminal, the management server transmits the coordinates information indicative of a coordinates example including a commodity corresponding to the received commodity code, to the purchaser terminal.

2. The coordinates information providing system according to claim 1, wherein
when the management server receives the commodity code from the purchaser terminal, the management server transmits commodity information corresponding to the received commodity code to the purchaser terminal, and wherein
when the purchaser terminal receives the commodity information from the management server, the purchaser terminal displays the received commodity information.

3. The coordinates information providing system according to claim 1 or 2, wherein
the purchaser terminal transmits the commodity code and information informing of a purchaser's planning to purchase or having purchased a commodity corresponding to the commodity code, to the management server, and wherein
when the management server receives the commodity code and the information informing of the purchaser's planning to purchase or having purchased the commodity, the commodity code and information being sent from the purchaser terminal, the management server extracts the commodity information based on the commodity code, create a list of the commodities the purchaser plans to purchase or a list of the commodities the purchaser has purchased based on the extracted commodity information, and transmits the created list in response to a request from the purchaser terminal.

4. The coordinates information providing system according to claim 3, wherein
the management server stores therein the commodity information and the information informing of the purchaser's planning to purchase or having purchased the commodity such that both pieces of information are correlated with each other, and transmits the stored information in response to a request from purchaser terminal.

5. The coordinates information providing system according to claim 3, wherein
when the management server receives information informing of allowing sales of a commodity listed in a list of the commodities the purchaser has purchased, the information being sent from the from the purchaser terminal, the management server creates a page for selling the commodity the sales of which is allowed, and renders the created page accessible via a network.

6. The coordinates information providing system according to any one of claims 1 to 4, wherein
the management server browses around a Web page of a commodity manufacture or commodity sales agent and extracts and stores the commodity information.

7. The coordinates information providing system according to any one of claims 1 to 5, further comprising an information provider terminal that transmits the coordinates information to the management server to register the coordinates information therewith.

8. The coordinates information providing system of claim 7, wherein
the management server stores therein two or more pieces of the coordinates information provided by an information provider who operates the information provider terminal such that the pieces of the coordinates information are correlated with each other, and transmits the stored information in response to a request from the purchaser terminal.

9. The coordinates information providing system according to any one of claims 1 to 8, wherein
the purchaser terminal reads information peculiar to a store from a recording medium placed in the store and transmits the read information together with the commodity code, to the management server, and wherein
the management server stores therein the information peculiar to the store and the commodity code, the information and the commodity code being sent from the purchaser terminal, such that the information and the commodity code are correlated with each other.

10. The coordinates information providing system according to claim 9, wherein
when the management server receives a commodity code for a purchased commodity from the purchaser terminal when the purchaser has purchased the commodity on an EC site, the management server extracts a store specific code correlated with the received commodity code, from store specific codes already stored in the management server, and carries out settlement transactions such that part of payment for the purchased commodity is transferred to a bank account of a store identified by the extracted store specific code.

11. A read information management system comprising:
a purchaser terminal operated by a commodity purchaser, the purchaser terminal reading a commodity code from a commodity code recording medium recoding thereon the commodity code identifying a commodity; and
a management server connected to the purchaser terminal via a network, the management server managing information of commodity purchase by the purchaser,
wherein
the purchaser terminal reads information peculiar to a store from a recording medium placed in the store and transmits the read information together with the commodity code, to the management server, and wherein
the management server stores therein the information peculiar to the store and the commodity code, the information and the commodity code being sent from the purchaser terminal, such that the information and the commodity code are correlated with each other.

12. The read information management system according to claim 11, wherein
when the management server receives a commodity code for a purchased commodity from the purchaser terminal when the purchaser has purchased the commodity on an EC site, the management server extracts the store specific code correlated with the received commodity code, from the store specific codes already stored in the management server, and carries out settlement transactions such that part of payment for the purchased commodity is transferred to a bank account of a store identified by the extracted store specific code.
